(19) Europäisches Patentamt
European Patent Office
Office européen des brevets

(11) EP 3 741 803 B1

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(21) Anmeldenummer: **20172843.3**

(22) Anmeldetag: **05.05.2020**

(51) Int Cl.:
***C08L 9/02*** *(2006.01)* ***C08L 63/00*** *(2006.01)*
***C08L 63/04*** *(2006.01)* ***C09J 109/02*** *(2006.01)*
***C09J 163/00*** *(2006.01)* ***C09J 163/04*** *(2006.01)*

(54) **VERFAHREN ZUR HERSTELLUNG HAFTKLEBRIGER REAKTIVKLEBEBÄNDER**

METHOD FOR PRODUCING REACTIVE ADHESIVE TAPES

PROCÉDÉ DE FABRICATION DE BANDES ADHÉSIVES RÉACTIVES AUTOADHÉSIVES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2019 DE 102019207550**

(43) Veröffentlichungstag der Anmeldung:
**25.11.2020 Patentblatt 2020/48**

(73) Patentinhaber: **tesa SE**
**22848 Norderstedt (DE)**

(72) Erfinder:
- **Schuh, Dr. Christian**
**22767 Hamburg (DE)**
- **BRIX, Rolf**
**24640 Schmalfeld (DE)**
- **Czeski, Tanita**
**22851 Norderstedt (DE)**

(74) Vertreter: **tesa SE**
**Hugo-Kirchberg-Straße 1**
**22848 Norderstedt (DE)**

(56) Entgegenhaltungen:
**EP-A1- 3 091 059**
**WO-A1-2004/067664**
**DE-A1-102004 057 650**
**DE-A1-102006 055 093**
**DE-A1-102015 217 840**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 741 803 B1

## Beschreibung

Die Erfindung betrifft ein Verfahren zur Herstellung von haftklebrigen Klebemassen umfassend zumindest eine Elastomerkomponente sowie zumindest einen Reaktivklebstoff umfassend ein oder mehrere Epoxidharze sowie zumindest einen Härter für Epoxidharze.

In vielen Bereichen der konstruktiven Industrie kommen vermehrt Klebemassen statt bisheriger mechanischer Verbindungen, wie beispielweise Verschrauben und Vernieten, zum Einsatz. Klebemassen haben eine Reihe von Vorteilen, so können sie in Form von Klebefilmen etwa der genauen Verbindungsgeometrie angepasst werden. Weiterhin ist es möglich, die Verbindungsfestigkeiten durch Wahl der jeweiligen chemischen Systeme anzupassen - angefangen von wiederlösbaren (reversiblen) Verklebungen bis hin zu sehr festen Verklebungen, bei denen der Versuch, sie wieder zu lösen, zur Zerstörung der jeweiligen Substrate führt.

Haft- oder Selbstklebstoffe haben den Vorteil, bei Raumtemperatur bereits ohne erhöhten Druck an einer Vielzahl von Substraten anzuhaften und somit eine Verklebung zu bewirken. Mit doppelseitig klebenden Haftklebebändern können zwei Substrate miteinander verklebt werden. Die Verklebungskräfte, die durch Haftklebemassen erreicht werden, sind aber häufig für solche Anwendungen, in den sehr hohe Verklebungskräfte erzielt werden müssen, nicht ausreichend.

Für eine Vielzahl von Anwendungen werden daher sogenannte reaktive Klebstoffe eingesetzt, die aus miteinander reaktionsfähigen Komponenten aufgebaut sind, die bei Energiezufuhr zur Reaktion gebracht werden und aushärten. Mit solchen Klebmassen lassen sich sehr hohe Verklebungsfestigkeiten erzielen, deren Beständigkeiten Größenordnungen über denen von Selbstklebstoffen liegt. Da die Komponenten von Reaktivklebstoffe üblicherweise in flüssiger Form vorliegen, sind diese für Klebebänder schwierig nutzbar.

Reaktive Klebstoffe werden inzwischen jedoch auch bereits in Form von Klebefilmen oder Klebebändern eingesetzt: In einer Variante solcher Klebefilme reagieren die das Klebeband bildenden Polymere und weitere Komponenten miteinander unter Ausbildung chemischer Bindungen. In einer weiteren Variante wird das Klebeband an sich durch ein sogenanntes Matrixpolymer gebildet, das sich selbst im Wesentlichen inert verhält, in dem aber die zur Reaktion zu bringenden Komponenten homogen verteilt sind. Nach Energiezufuhr können diese zur Reaktion gebracht werden und ein semi-interpenetrierendes Netzwerk in dem Matrixpolymer ausbilden.

Ein Reaktiv-Klebstoffsystem der zweiten Art offenbart beispielsweise die WO 2007/093318 A. Die Schrift beschreibt eine nicht haftklebrige, hitzeaktivierbare Klebemasse auf Basis von Nitrilkautschuk, Epoxidharzen und Härtern, die in Filmform - also als Klebefilm, Klebeband bzw. Klebefolie - angeboten und appliziert wird. Da der Film selbst nicht haftklebrig ist, findet in der Regel eine Vorfixierung auf zumindest einem der zu verklebenden Substrate durch Lamination bei gemäßigt erhöhten Temperaturen - unterhalb der Aktivierungstemperatur der Härtungsreaktion - statt.

Einen weiteren reaktiven Klebstoff mit Nitrilkautschuk als Matrixpolymerkomponente und Epoxiden und Härtern als Reaktivkomponenten zeigt die DE 10 2015 217 860 A. Diese Schrift beschreibt ein Klebeband mit einer Schicht einer Klebemasse enthaltend mindestens ein Polymer, das bevorzugt der genannte Nitrilkautschuk ist, und optional mindestens ein Klebharz, weiterhin enthaltend mindestens ein Reaktivharz, wobei die Klebemasse auf 100 Teile Polymer und Klebharz mindestens 104 Teile des mindestens einen Reaktivharzes enthält, sowie mindestens einen Initiator und/oder Härter.

Für die vorgenannten Klebesysteme wird in nacharbeitbarer Lehre die Herstellung bzw. Verarbeitung aus der Lösung beschrieben. Dies entspricht dem üblichen Vorgehen bei der Herstellung von Haftklebmassen auf Basis von Acrylnitril-Butadien-Kautschuk: dabei werden das Basispolymer und die weiteren Bestandteile in einem geeigneten Lösemittel gelöst, und die erhaltene Mischung wird mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt.

Eine solche Vorgehensweise bedingt, dass die herstellbaren Filme nur begrenzte Dicken aufweisen.

Um in den erwähnten Industrieprozessen jedoch erweiterten Anforderungen zu genügen, ist es erforderlich, auch reaktive Klebesysteme in Form von Klebebändern mit größeren Schichtdicken zur Verfügung zu stellen. Mit relativ dicken Klebefilmen können beispielsweise größere Substratabstände oder Unregelmäßigkeiten in der Klebefuge ausgeglichen werden, ohne dass die Verklebungsfestigkeit hierunter leidet.

Für Klebstoffschichten höherer Dicke hat sich im Stand der Technik insbesondere die Verarbeitung der zugrundeliegenden Klebmassen aus der Schmelze, also lösemittelarm bzw. -frei, bewährt. Solche Verfahren beinhalten Prozessschritte, bei denen die Klebemasse in geschmolzener Form, beispielsweise durch Düsenspalte, auf ein Substrat aufgelegt wird. Diese relativ hochviskosen Schmelzen lassen sich auch als dicke Produkte ausformen. Für solche Prozesse ist es jedoch erforderlich, dass die sich entsprechenden Polymersysteme zur Verarbeitung auch tatsächlich in die Schmelze bringen lassen, dass den Systemen also thermoplastische und somit schmelzbare Polymer zugrunde liegen.

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster

Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt.

Aus dem Stand der Technik sind auch Verfahren bekannt, nach denen nicht-thermoplastische Elastomere durch lösemittelarme bzw. lösemittelfreie Prozesse hergestellt und/oder verarbeitet werden können. Bei einem Teil dieser Verfahren läuft zumindest ein Teil der Verarbeitungsschritte in einem Extruder ab. Diese Verfahren zeigen aber Nachteile für die oben beschrieben Polymere.

So offenbart die WO 4911157 A ein Verfahren, bei dem Elastomere, wie Naturkautschuk oder Ethylen-Propylen-Dien-Kautschuk (EPDM), in einem Doppelschneckenextruder (DSE) "mastifiziert" und damit aufschließbar gemacht werden. Dabei wird zunächst das reine Elastomer in den Extruder zugegeben und mastifiziert, gefolgt von einer späteren Zudosierung von klebrigmachenden (nicht reaktiven) Harzen. Nachteilhaft an einem solchen Prozess ist die Mastikation (auch 'Mastifizierung') an sich, da dieser Verfahrensschritt immer mit einem Molmassenabbau verbunden ist, der die Eigenschaften des Elastomers stark verändert. Auf ein Massesystem von Nitrilkautschuk (NBR) und Reaktivharzen, bei dem es um die gezielte Steuerung der Eigenschaften härtbarer Kautschukpolymere geht, ist diese Offenbarung dementsprechend nicht bezogen.

In der DE 198 06 609 A wird ein mastikationsfreies Verfahren zum Aufschluss nicht-thermoplastischer Elastomere im Planetwalzenextruder (PWE) beschrieben. Kern der Offenbarung ist, dass die Klebharze bereits mit dem Elastomer zudosiert werden. Massetemperaturen von minimal 98°C sind offenbart. Es werden zusätzlich vernetzende Stoffe erwähnt, die die Kohäsion der Klebmasse steigern. Hierunter findet sich ein epoxidiertes Polyesterharz. Diese Vernetzer reagieren bereits im Prozess. Auch in dieser Schrift werden weder Nitrilkautschuk noch Reaktivharze erwähnt, somit legt auch diese Schrift nicht die Extrusionsverarbeitung solcher Reaktivsysteme nahe, die erst später - nach Verlassen des Extruders - zur Reaktion gebracht werden sollen.

Hiermit einher geht die Offenbarung der DE 10 2009 025 641 A, die eine hitzeaktivierbare reaktive Klebmasse auf Basis von Nitrilkautschuk-Novolkaharzen betrifft. Die Schrift lehrt explizit, dass ein Hotmelt-Prozess (also ein lösemittelfreier Verarbeitungsprozess, wie es die lösemittelarme oder-freie Extruderverarbeitung ist) nur "sehr schwierig möglich" wäre, da "eine frühzeitige Vernetzung während des Herstellungsprozesses vermieden werden" müsse. Die Schrift lehrt also gerade von der Verarbeitung solcher Reaktivsysteme als Hotmelt fort.

Die US 8,741,094 B beschreibt reaktive Zweischichtklebebänder aus einer Epoxidkomponente und einer Elastomerkomponente. Als bevorzugt wird Nitrilkautschuk (NBR) beschrieben; auch eine Verarbeitung im Extruder findet Erwähnung. Die Verarbeitung im Extruder betrifft hier allerdings das Aufschmelzen des kalt polymerisierten NBRs, wiederum aber nicht die Verarbeitung eines Reaktivsystems, das seine Reaktivität für einen Zeitpunkt nach der Verarbeitung erhalten soll, als Ganzes.

Die DE 10 2015 120 583 A, DE 10 2015 120 585 und DE 10 2015 120 586 beschreiben die kontinuierliche Verarbeitung von Gummimaterial in so genannten "RingExtrudern", nämlich Mehrwellenextrudern mit mehreren Schnecken, die kreisförmig angeordnet sind. Auch diese Schrift beschreiben nicht die Extrusionsverarbeitung von Reaktivsystemen, die nach Verlassen des Extruders zur Reaktion gebracht werden sollen. Zudem beinhaltet auch in diesen Schriften die Verarbeitung des Gummimaterials wesentlich die Mastikation der Gummimaterialien, was aber zu einer unerwünschten Eigenschaftsänderung der entsprechenden Elastomere führt, siehe weiter oben.

Die WO 2007/093318 A beschreibt eine nicht haftklebrige, hitzeaktivierbare Klebemasse auf Basis von Nitrilkautschuk und Epoxidharzen. Es werden weder die Verarbeitung als Hotmelt noch eine Verarbeitung im Extruder erwähnt.

Auch die EP 1 819 794 A beschreibt nicht haftklebrige, hitzeaktivierbare Klebemasse auf Basis von Nitrilkautschuk und Epoxidharzen. Be- und Verarbeitungen werden ausschließlich als Lösungsmittelprozesse beschrieben. Vielmehr wird auch hier explizit auf die Schwierigkeit der Hotmeltverarbeitung von reaktiven Klebemassen hingewiesen. Bei Berücksichtigung dieser Schrift hätte es dem Fachmann also wiederum fern gelegen, eine lösemittelfreie Verarbeitung in einem Extruder in Betracht zu ziehen.

Die WO 2006/131214 A beschreibt reaktive, hitzeaktivierbare Klebemassen auf Basis zumindest zweier Nitrilkautschuke und Reaktivharzen, wobei auch Epoxidharze erwähnt sind. Die Schrift beschreibt weiterhin, dass die dort genannten Klebmassensysteme in einem Doppelschneckenextruder mit den zuzusetzenden Harzen vermischt werden könnten. Das dort beschrieben Verfahren fordert jedoch, dass die Klebemasse in der Schmelze hergestellt wird; sodann kann die Vermischung mit den Harzen im genannten Extruder geschehen. Zwingende Voraussetzung gemäß der Schrift sind also schmelzbare - somit thermoplastische - Polymere. Für nicht schmelzbare Nitrilkautschuke ist das dortige Verfahren weder beschrieben noch anwendbar.

Sofern es sich bei den genannten Harzen, die im Extruder der Schmelze beigemischt werden sollen, um die Reaktivharze handelt, setzt dies voraus, dass die Nitrilkautschuke bei einer Temperatur schmelzbar sein müssen, die unter der Aktivierungsenergie für die Reaktion des Reaktivsystems als Ganzes liegt, da dieses sonst in der Schmelze bereits abreagieren würde. Hinzu kommt, dass durch die in der Schmelze verminderte Viskosität des Klebmassensystems der mit der Extrusion verbundene Energieeintrag vergleichsweise niedrig ist.

Nicht thermoplastische Polymersysteme, die somit auch nicht schmelzbar sind, unterliegen somit gänzlich anderen Verfahrensvoraussetzungen. Hinweise darauf, dass sich das genannte Verarbeitungsprinzip im Doppelschneckenextruder auf nichtschmelzende Systeme ausweiten ließe, gibt die genannte Schrift nicht an, geschweige denn, dass sie eine hierfür nacharbeitbare Lehre anbieten würde. Zudem zeigen auch die Beispiele ausschließlich eine Verarbeitung aus Lösung (im Kneter), aber keine im Extruder, auch nicht aus der Schmelze. Auch in Kenntnis der weiter oben erwähnten Schriften kommt der Fachmann nicht zu der Erkenntnis, die nicht-thermoplastischen Reaktivsysteme der WO 2006/131214 A im Mehrwellenextruder verarbeiten zu wollen.

Ausgehend von der Lehre der WO 2006/131214 A, die sich ausschließlich auf schmelzfähige Polymere bezieht, findet der Fachmann auch mit Kenntnis der WO 2006/131214 A also kein Verarbeitungsverfahren für nicht-schmelzfähige, aber reaktive und daher chemisch sehr empfindliche Systeme.

Aufgabe der Erfindung ist es, einen Herstell- bzw. Verarbeitungsprozess für solche haftklebrigen Klebesysteme anzubieten, die zumindest teilweise auf nicht-thermoplastische Elastomere zurückzuführen sind, insbesondere für solche haftklebrigen Klebemassen, die eine polymere Filmbildner-Matrix und zumindest ein Reaktivklebstoff umfassen.

Dabei ist es angestrebt, dass die Klebesysteme nach der Verarbeitung - insbesondere nach einer Ausformung zum Film - eine gewisse Haftklebrigkeit aufweisen und zudem noch mittels Aktivierung reaktiv härtbar sind, so dass sie letztlich sehr hohe Verklebungsfestigkeiten ausbilden können. Die Möglichkeit langer Lagerzeiten der nicht gehärteten Klebmassen ohne signifikanten Verlust der Reaktivität wird dabei angestrebt. Es ist zudem gewünscht, dass sich mit dem Verfahren auch große Schichtdicken, etwa von 100 μm und mehr, realisieren lassen.

Gelöst wird die Aufgabe durch die Verwendung eines Mehrwellenextruders zum Aufschluss nicht-thermoplastischer Elastomere durch einen Teil der anwesenden Reaktivharze. Als Mehrwellenextruder werden dabei solche Extruder eingesetzt, die wenigstens sechs in einem Kreis angeordnete achsparallele, gleichsinnig drehende Schneckenwellen aufweisen. Sofern im Weiteren bei der Beschreibung des erfindungsgemäßen Verfahrens von "Mehrwellenextrudern" gesprochen wird, bezieht sich das auf solche wie erfindungsgemäß verwendeten Mehrwellenextruder.

Dementsprechend betrifft der erste Anspruch ein Verfahren zur Herstellung von haftklebrigen Klebemassen, die eine polymere Filmbildner-Matrix und zumindest einen Reaktivklebstoff umfassen. Die Filmbildner-Matrix wird dabei zumindest teilweise durch solche Elastomere gebildet, die zumindest vor der Durchführung des Verfahrens nicht-thermoplastisch sind. Insbesondere bevorzugt umfassen die nicht-thermoplastischen Elastomere zumindest einen Nitrilkautschuk - sofern die polymere Filmbildner-Matrix nur ein nicht-thermoplastisches Elastomer umfasst oder aus einem solchen besteht, ist dieses dementsprechend bevorzugt ein Nitrilkautschuk. Der Reaktivklebstoff umfasst zumindest ein Epoxidharz und einen Härter für Epoxidharze. In dem erfindungsgemäßen Verfahren werden das bzw. die nicht-plastischen Elastomere - insbesondere einschließlich der bevorzugt vorhandenen Nitrilkautschuke -mit zumindest einem Teil der Epoxidharze aufgeschlossen.

Als "nicht-thermoplastisch" im Sinne der vorliegenden Schrift werden solche Substanzen beziehungsweise Zusammensetzungen verstanden, die bei Erwärmung auf eine Temperatur von 150 °C, bevorzugt bei Erwärmung auf eine Temperatur von 200 °C, sehr bevorzugt bei Erwärmung auf eine Temperatur von 250 °C kein thermoplastisches Verhalten zeigen, insbesondere derart, dass sie im Thermoplastizitäts-Test (siehe Experimenteller Teil, Testmethode E) als nicht thermoplastisch gelten.

In Extrusionsprozessen sind nicht-thermoplastische Polymere regelmäßig schwieriger zu verarbeiten als thermoplastische Polymere. Das erfindungsgemäße Verfahren ist hervorragend dazu geeignet, die Problematik bei der Verarbeitung nicht-thermoplastischer Elastomere zu lösen, ohne die Qualität der resultierenden Klebstoffe nachteilig zu beeinflussen. Durch den erfindungsgemäß durchgeführten Aufschluss können die resultierenden Elastomer-Reaktivharz-Blends selbst trotz Verwendung nicht-thermoplastischer Elastomere thermoplastische Klebstoffe sein.

Sofern im Rahmen dieser Schrift von nicht-thermoplastischen Elastomeren' gesprochen wird, sind damit dementsprechend solche Elastomere gemeint, die zumindest vor dem Aufschluss mit einem Teil der Reaktivharze nicht-thermoplastischer Art sind, selbst wenn diese schlussendlich in einer thermoplastischen Klebmasse vorliegen.

Durch das Aufschließen wird das - üblicherweise granulatförmig eingesetzte - nicht-thermoplastische Elastomer bzw. werden die - üblicherweise granulatförmig eingesetzten - nicht-thermoplastischen Elastomere, die an sich nicht schmelzbar und somit nicht homogenisierbar wären, derart in eine verarbeitbare Form gebracht, dass schlussendlich ein homogenes Produkt entsteht. Insbesondere wird also in dem Verarbeitungsprozess eine homogene Schmelze erzeugt, die sich zu einem homogenen Film verarbeiten lässt.

Bei dem Aufschluss wird das - üblicherweise granulatförmig eingesetzte - Elastomer mit einer bestimmten Menge an Aufschlussmittel verknetet, mittels der Blend-Bildung kann eine Homogenisierung erzielt werden. Vorliegend wird als Aufschlussmittel zumindest ein Teil der Epoxidharze, die gleichzeitig als Reaktivharze für den Reaktivklebstoff dienen, verwendet.

Der Aufschluss des bzw. der nicht-thermoplastischen Elastomere gilt als erfindungsgemäß bewirkt, wenn die resultierende Klebemasse die Prüfung auf Homogenität im Aufschlusstest besteht. Sie wird als homogen bezeichnet, wenn auf einer gestreckten Fläche von 100 $cm^2$ mit dem Auge weniger als 10, bevorzugt weniger als 5, und insbesondere weniger als 2 unaufgeschlossene Elastomer-Partikel (insbesondere Nitrilkautschuk-Partikel) zu finden sind. Bei der

genannten Prüfung sollte ferner kein nicht eingearbeitetes Reaktivharz zu sehen sein.

Der Begriff ‚Nitrilkautschuk' steht wie üblich für ‚crylnitril-Butadien-Kautschuk', Kurzzeichen NBR, abgeleitet von nitrile butadiene rubber, und bezeichnet Synthesekautschuke, die durch Copolymerisation von Acrylnitril und Butadien in Masseverhältnissen von ungefähr 10 : 90 bis 52 : 48 (Acrylnitril: Butadien) gewonnen werden.

Klebstoffe sind (nach DIN EN 923: 2008-06) nichtmetallische Stoffe, die Fügeteile durch Flächenhaftung (Adhäsion) und innere Festigkeit (Kohäsion) verbinden. Klebstoffe können selbstklebrig sein und/oder erst durch bestimmte Aktivierung, etwa durch thermische Energie und/oder aktinische Strahlung ihre endgültige Klebkraft ausbilden.

Reaktivklebstoffe (die vor Aktivierung selbstklebrig oder nichtklebrig sein können) umfassen chemisch reaktive Systeme ("Reaktivsysteme"), die durch Aktivierung zu einer Härtungsreaktion führen und besonders hohe Klebkräfte zu den Substraten, auf denen sie verklebt werden, ausbilden können. Diese Reaktivsysteme bestehen häufig aus zwei oder mehreren Komponenten, die unter geeigneten Bedingungen - etwa von außen getriggerter Aktivierung - zur Reaktion miteinander gebracht werden können.

Die Härtung des Reaktivklebstoffs erfolgt dementsprechend insbesondere über die Reaktion eines oder mehrere Reaktivharze mit einem oder mehreren Härtern.

Reaktivharze sind vernetzbare Harze, nämlich funktionelle Gruppen umfassende, oligomere oder kurzkettig polymere Verbindungen, insbesondere mit einer zahlenmittleren Molmasse Mn von nicht mehr als 10 000 g/mol; und zwar insbesondere solche mit mehreren funktionellen Gruppen im Makromolekül. Da es sich bei den Harzen um eine Verteilung von Makromolekülen unterschiedlicher Einzelmassen handelt, können die Reaktivharze Fraktionen enthalten, deren zahlenmittlere Molmasse deutlich höher liegt, zum Beispiel bis etwa 100 000 g/mol, dies gilt insbesondere für polymermodifizierte Reaktivharze, wie beispielsweise elastomermodifizierte Reaktivharze.

Die funktionellen Gruppen der Reaktivharze sind derart, dass sie unter geeigneten Bedingungen - insbesondere nach einer Aktivierung beispielsweise durch erhöhte Temperatur (thermische Energie) und/oder durch aktinische Strahlung (wie Licht, UV-Strahlung, Elektronenstrahlung usw.) und/oder durch Initiierung und/oder Katalyse durch weitere chemische Verbindungen, wie etwa Wasser (feuchtigkeitshärtende Systeme) - mit einem Härtungsreagenz zu einer Aushärtung der die Reaktivharze und das Härtungsreagenz umfassenden Zusammensetzung führen, insbesondere im Sinne einer Vernetzungsreaktion. Härtungsreagenzien können beispielswiese aus einem Härter oder aus einer Mischung mehrere Härter oder aus einer Mischung eines oder mehrerer Härter mit Beschleunigern gebildet werden.

Als Epoxidharze werden im Rahmen dieser Schrift Epoxid-Gruppen umfassende Reaktivharze, insbesondere solche mit mehr als einer Epoxid-Gruppe pro Molekül, bezeichnet, also solche Reaktivharze, bei denen die funktionellen Gruppen oder zumindest ein Teil der funktionellen Gruppen Epoxidgruppen sind. Die Umwandlung der Epoxidharze während der Härtungsreaktion der härtbaren Zusammensetzung erfolgt insbesondere über Polyadditionsreaktionen mit geeigneten Epoxid-Härtern beziehungsweise durch Polymerisation über die Epoxid-Gruppen. Je nach Wahl des Epoxid-Härters können auch beide Reaktionsmechanismen parallel stattfinden.

Als Härter bezeichnet wird im Rahmen dieser Schrift entsprechend DIN 55945: 1999-07 die - als Bindemittel wirkende(n) - chemische(n) Verbindung(en) bezeichnet, die den vernetzbaren Harzen zugesetzt wird (werden), um die Härtung (Vernetzung) der härtbaren Zusammensetzung, insbesondere in Form eines applizierten Films, zu bewirken. In den härtbaren Zusammensetzungen ist Härter dementsprechend die Bezeichnung für diejenige Komponente, die nach dem Vermischen mit den Reaktivharzen und entsprechender Aktivierung die chemische Vernetzung bewirkt.

Als Beschleuniger werden im Rahmen dieser Schrift solche chemischen Verbindungen bezeichnet, die bei Anwesenheit eines anderen Härters die Reaktionsgeschwindigkeit der Härtungsreaktion und/oder die Geschwindigkeit der Aktivierung der Härtung der Epoxidharze insbesondere im Sinne eines Synergismus erhöhen.

Mit dem Attribut "haftklebrig" - auch als Bestandteil von Substantiven wie etwa in Haftklebstoff -oder synonym mit dem Attribut "selbstklebrig" - ebenfalls auch als Bestandteil von Substantiven - werden im Rahmen dieser Schrift solche Zusammensetzungen bezeichnet, die bereits unter relativ schwachem Andruck - sofern nicht anders angegeben, bei Raumtemperatur, also 23 °C - eine dauerhafte Verbindung mit dem Haftgrund erlauben und nach Gebrauch im Wesentlichen rückstandsfrei vom Haftgrund wieder abgelöst werden können. Haftklebstoffe werden bevorzugt in Form von Klebebändern eingesetzt. Im Sinne der vorliegenden Erfindung besitzt ein haftklebriges Klebeband eine Klebkraft im unausgehärteten Zustand von wenigstens 1 N/cm. Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 $\mu$m verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergibt sich als Mittelwert aus drei Einzelmessungen.

Haftklebstoffe wirken somit bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Haftklebestoffe beruht auf ihren adhäsiven Eigenschaften und die Wiederablösbarkeit auf ihren kohäsiven Eigenschaften.

Erfindungsgemäß ist es gelungen, bei der Herstellung von Klebebändern den Aufschluss ansonsten schwierig

verarbeitbarer nicht-thermoplastischer Elastomere - wie insbesondere Nitrilkautschuk - durch eine Komponente des Reaktivklebstoffs, nämlich zumindest einen Teil der Reaktivharze, zu bewirken. Dadurch konnte es zudem erreicht werden, auf die sonst üblicherweise eingesetzten Aufschlusskomponenten - wie Klebharze oder Weichmacher oder dergleichen —zu verzichten. Diese üblichen Aufschlusskomponenten haben erfahrungsgemäß einen nachteiligen - weil die eigentliche Rezeptur verfälschenden - Einfluss auf die schlussendlich bewirkten Klebkräfte, die mit der haftklebrigen, härtbaren Klebemasse bewirkt werden können.

Der Erfolg des erfindungsgemäß vorgeschlagenen Verfahrens war umso weniger zu erwarten, als dass nicht-thermoplastische Elastomere - wie etwa Nitrilkautschuke - regelmäßig schwieriger aufzuschließen sind als thermoplastische Elastomere. Insbesondere nicht-thermoplastische Elastomere mit erhöhter Polarität - wie etwa Nitrilkautschuke mit relativ hohem Acrylnitrilanteil - zeichnen sich durch eine abnehmende Elastizität und damit eine erschwerte Verarbeitbarkeit aus. Zudem wurde mit dem Reaktivharz hierzu ein chemisch empfindliches System verwendet, so dass zu erwarten gewesen wäre, dass es unter den Bedingungen während des Aufschlusses - nämlich hoher eingetragener Scherenergie - zu einem Verbrennen des Nitrilkautschuks oder zu anderen unerwünschten Reaktionen unter Beteiligung des Reaktivharzes, etwa zu erheblicher Vergelung, die eine gleichmäßige Beschichtung zum Klebefilm verhindern würde, kommen würde.

Erfindungsgemäß gelingt es mit dem erfindungsgemäßen Verfahren dabei, drei Prozessschritte bei der Compoundierung im Mehrwellenextruder und gegebenenfalls nachgeschalteten Aggregaten zu vereinen: Zum einen die Realisierung guter Verarbeitbarkeit des nicht-thermoplastischen Elastomers durch den Aufschluss des Elastomers im Mehrwellenextruder; zum anderen die für die resultierende Klebemasse gewünschte homogene Einbringung des Reaktivharzes in die Elastomer-Matrix. Insbesondere im letzten Abschnitt des Mehrwellenextruders wird die Klebmasse entgast.

Die mit dem erfindungsgemäßen Verfahren hergestellten Klebemassen umfassen eine Filmbildner-Komponente (im folgenden "Filmbildner-Matrix" genannt) und eine Reaktivkomponente (im folgenden "Reaktivklebstoff" genannt). Insbesondere werden die Klebemassen zum Klebefilm ausgeformt und dienen in dieser Form als Klebeband oder als Bestandteil eines Klebebandes.

Die Filmbildner-Matrix sorgt insbesondere dafür, dass ein formstabiler Film (die räumliche Ausdehnung in Dickenrichtung des Films ist in der Regel sehr viel kleiner als die räumlichen Ausdehnungen in Langs- und Querrichtung, also als in den zwei Raumrichtungen der Flächenausdehnung des Films) zur Verfügung gestellt werden kann, während die Reaktivkomponente zur Aushärtung des Klebebandes und damit zur Erzielung hoher Endklebfestigkeiten dient.

Bei den erfindungsgemäßen Klebebändern fungieren dementsprechend das beziehungsweise die aufgeschlossenen Elastomere - einschließlich dem beziehungsweise der bevorzugt vorhandenen Nitrilkautschuke - als polymere filmbildende Matrix (Filmbildner-Matrix), die in der Lage ist, einen formstabilen und/oder selbsttragenden Klebefilm auszubilden, insbesondere nach Beschichtung der haftklebrigen Klebemasse auf ein permanentes oder ein temporär verwendetes Trägermaterial.

In diese Filmbildner-Matrix ist der Reaktivklebstoff - insbesondere homogen verteilt - eingebettet, insbesondere so dass er im erfindungsgemäßen Klebefilm im Wesentlichen die gleiche (makroskopische) Raumverteilung einnimmt wie die Filmbildner-Matrix. Reaktivklebstoffe wären ohne die Matrix in der Regel nicht formstabil, sondern würden insbesondere flüssig vorliegen.

Bei der Aushärtung kann der Reaktivklebstoff ein separates Netzwerk zur Filmbildner-Matrix ausbilden, so dass dann insbesondere zwei unabhängige, sich durchdringende Netzwerke vorliegen. Während das Netzwerk des reagierten Reaktivklebstoffs dabei jedenfalls ein chemisch vernetztes System darstellt, kann das Netzwerk, das durch die Filmbildner-Matrix gebildet ist, entweder ebenfalls durch chemische Vernetzung, aber auch durch physikalische Vernetzung gebildet sein, etwa beispielsweise durch rein mechanische Verschlaufungen. In bevorzugter Vorgehensweise ist der Reaktivklebstoff derart gewählt, dass er sich - insbesondere unter Verarbeitungs- und Härtungsbedingungen - im Wesentlichen inert zu den Elastomeren verhält, also keinerlei chemische Bindungen zu den Makromolekülen der Filmbildner-Matrix aufbaut oder nur in nicht signifikantem Umfang.

In alternativer Vorgehensweise kann es aber auch gewünscht sein, eben solche chemischen Verknüpfungen zwischen dem durch den Reaktivklebstoff aufgebauten Netzwerk und der Filmbildner-Matrix zu bewirken, etwa um die schlussendliche Kohäsion des Gesamtsystems zu verbessern. Der Reaktivklebstoff und/oder die - insbesondere als nicht-thermoplastische Elastomere eingesetzten - Elastomere können beispielsweise durch entsprechende funktionelle Gruppen modifiziert sein, um eine solche Verknüpfung zu ermöglichen. Dabei ist jedoch darauf zu achten, dass bei der Verarbeitung im Mehrwellenextruder noch keine solche Reaktion in störendem Maße stattfindet, die den Verarbeitungsprozess erschweren würde.

Klebebänder

Der allgemeine Ausdruck "Klebeband" umfasst einerseits ein Trägermaterial, welches einoder beidseitig mit einer (Haft)klebemasse versehen ist und gegebenenfalls weitere, dazwischenliegende Schichten aufweisen kann..

Insbesondere umfasst der Ausdruck "Klebeband" im Sinne der vorliegenden Erfindung jedoch sogenannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt. Die Klebemasse kann so direkt zur Verbindung zweier Oberflächen verwendet werden. Derartige trägerlose Transferklebebänder sind erfindungsgemäß besonders bevorzugt. Mit einem solchen erfindungsgemäßen trägerlosen Transferklebeband wird eine in Positionierung und Dosierung sehr genaue Verklebung ermöglicht.

Es sind auch Klebebänder möglich, bei denen nicht mit zwei Linern, sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Klebebänder, die ein- oder beidseitig mit Klebstoffen beschichtet sind, werden am Ende des Herstellungsprozesses zumeist zu einer Rolle in Form einer archimedischen Spirale aufgewickelt oder kreuzgespult. Um bei doppelseitig klebenden - insbesondere haftklebrigen - Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebemassen (Transferklebeband) und Klebebandabschnitten (z.B. Etiketten) eingesetzt. Diese Liner sorgen des Weiteren dafür, dass die Klebemasse vor der Anwendung nicht verschmutzt wird.

Ein Liner ist nicht Bestandteil eines Klebebandes, sondern nur ein Hilfsmittel zu dessen Herstellung, Lagerung oder für die Weiterverarbeitung. Ebenso ist der Verbund nur temporär und nicht dauerhaft.

Die erfindungsgemäßen Klebebänder umfassen zumindest einen Klebefilm, der grundsätzlich ausgebildet ist aus einer polymeren filmbildenden Matrix (im Rahmen dieser Schrift kurz als "Filmbildner-Matrix" bezeichnet) mit einem darin eingebetteten Reaktivklebstoff. Die Filmbildner-Matrix bildet dabei einen selbsttragenden dreidimensionalen Film aus (wobei die räumliche Ausdehnung in Dickenrichtung des Films in der Regel sehr viel kleiner ist als die räumlichen Ausdehnungen in Längs- und Querrichtung, also als in den zwei Raumrichtungen der Flächenausdehnung des Films). In dieser Filmbildner-Matrix ist der Reaktivklebstoff, umfassend zumindest ein Reaktivharz sowie einen Härter für das Reaktivharz, verteilt, bevorzugt homogen verteilt, insbesondere so dass der Reaktivklebstoff - der ohne die Matrix in der Regel nicht selbsttragend wäre - im erfindungsgemäßen Klebefilm im Wesentlichen die gleiche (makroskopische) Raumverteilung einnimmt wie die Filmbildner-Matrix. Erfindungsgemäß haben die erfindungsgemäßen Klebefilme zumindest vor der Härtungsreaktion haftklebrige Eigenschaften.

Die erfindungsgemäßen Klebstofffilme bestehen grundsätzlich aus einer Matrix, im Rahmen dieser Schrift kurz als "Filmbildner-Matrix" bezeichnet wird, in der die Reaktivharze enthalten sind. Aufgabe dieser Matrix ist es, ein insbesondere inertes Grundgerüst für die Reaktivharze zu bilden, so dass diese nicht - wie im Stand der Technik - flüssig vorliegen und damit die genannten Probleme auslösen können, sondern in einem Film oder einer Folie eingelagert sind. Auf diese Art und Weise wird eine einfachere Handhabung gewährleistet. Die der Filmbildner-Matrix zugrunde liegenden Polymere sind dabei durch hinreichende Wechselwirkungen der Makromoleküle untereinander in der Lage, einen selbsttragenden Film ausbilden zu können, beispielweise - ohne sich hierdurch im Erfindungsgedanken unnötig beschränken zu wollen - durch Ausbildung eines Netzwerks aufgrund physikalischer und/oder chemischer Vernetzung.

Inert bedeutet in diesem Zusammenhang, dass die Reaktivharze unter geeignet gewählten Bedingungen (z. B. bei ausreichend geringen Temperaturen) im Wesentlichen nicht mit der polymeren Filmbildner-Matrix reagieren. Insbesondere soll bei der Herstellung, Verarbeitung (wie etwa der Beschichtung) und Härtung des Klebefilmes keine solche Reaktion stattfinden.

Mit dem erfindungsgemäßen Verfahren ist es möglich, auch solche Klebemassen erfolgreich herzustellen und zu verarbeiten, deren polymere Filmbildner-Matrix durch solche Elastomere gebildet oder maßgeblich geprägt wird, die als nicht-thermoplastische Elastomere eingesetzt werden. Der Anteil an Polymeren an der Filmbildner-Matrix, die in Form nicht-thermoplastischer Elastomere eingesetzt werden, kann dabei grundsätzlich beliebig hoch sein, etwa beispielsweise mehr als 50 Gew.-%, mehr als 75 Gew.-%, mehr als 90 Gew.-% oder sogar 100 Gew.-%, wobei insbesondere gilt, dass die Klebemasse auf 100 Teile Polymer und Klebharz mindestens 104 Teile des mindestens einen Reaktivharzes enthält.

Bei den nicht-thermoplastischen Elastomeren kann es sich insbesondere um einen Nitrilkautschuk oder eine Mischung mehrerer Nitrilkautschuke oder eine Mischung eines oder mehrerer anderer nicht-thermoplastischer Elastomere mit einem oder mehreren Nitrilkautschuken handeln.

In einer besonderen Variante der Erfindung sind als nicht-thermoplastische Elastomere ausschließlich ein Nitrilkautschuk oder eine Mischung mehrerer Nitrilkautschuke eingesetzt, ohne dass weitere nicht-thermoplastische

oder thermoplastische Elastomere zugegen wären.

In einer anderen besonderen Ausführung der Erfindung sind neben einem oder mehreren Nitrilkautschuken noch weitere nicht-thermoplastische Elastomere zugegen, beispielweise andere (nicht-thermoplastische) Kautschuke.

Die Herstellung von Nitrilkautschuken erfolgt praktisch ausschließlich in wässriger Emulsion. Im Stand der Technik werden die dabei resultierenden Emulsionen einerseits als solche (NBR-Latex) eingesetzt oder andererseits zum Festkautschuk aufgearbeitet.

Die Eigenschaften des Nitrilkautschuks hängen ab vom Verhältnis der Ausgangsmonomeren und von seiner Molmasse. Aus Nitrilkautschuk zugängliche Vulkanisate besitzen hohe Beständigkeit gegenüber Kraftstoffen, Ölen, Fetten und Kohlenwasserstoffen und zeichnen sich gegenüber solchen aus Naturkautschuk durch günstigeres Alterungsverhalten, niedrigeren Abrieb und verminderte Gasdurchlässigkeit aus.

Nitrilkautschuke sind in einer großen Bandbreite verfügbar. Neben dem Acrylnitril-Gehalt erfolgt die Unterscheidung der verschiedenen Typen insbesondere anhand der Viskosität des Kautschuks. Diese wird üblicherweise durch die Mooney-Viskosität angegeben. Diese wiederum wird zum einen durch die Anzahl der Kettenverzweigungen im Polymer und zum anderen durch die Molmasse bestimmt. Prinzipiell unterscheidet man bei der Polymerisation zwischen der sogenannten Kalt- und der Heißpolymerisation. Die Kaltpolymerisation erfolgt üblicherweise bei Temperaturen von 5 bis 15 °C und führt im Gegensatz zur Heißpolymerisation, die üblicherweise bei 30 bis 40 °C durchgeführt wird, zu einer geringeren Anzahl von Kettenverzeigungen.

Nitrilkautschuke sind von einer Vielzahl von Herstellern wie zum Beispiel Nitriflex, Zeon, LG Chemicals und Lanxess erhältlich.

Carboxylierte Nitrilkautschuk-Typen entstehen durch Terpolymerisation von Acrylnitril und Butadien mit kleinen Anteilen an Acrylsäure und/oder Methacrylsäure in Emulsion. Sie zeichnen sich durch hohe Festigkeit aus. Die selektive Hydrierung der C=C-Doppelbindung von Nitrilkautschuk führt zu hydrierten Nitrilkautschuken (H-NBR) mit verbesserter Beständigkeit gegen Temperaturerhöhung (bis 150 °C in Heißluft oder Ozon) oder Quellmittel (zum Beispiel schwefelhaltige Rohöle, Brems- beziehungsweise Hydraulikflüssigkeiten). Die Vulkanisation erfolgt mit üblichen Schwefelvernetzern, Peroxiden oder mittels energiereicher Strahlung.

Neben carboxylierten oder hydrierten Nitrilkautschuken gibt es auch flüssige Nitrilkautschuke. Diese werden während der Polymerisation durch die Zugabe von Polymerisationsreglern in ihrer Molmasse begrenzt und werden daher als flüssige Kautschuke erhalten.

Als "flüssig" werden im Rahmen dieser Schrift insbesondere allgemein solche Materialien angesehen, die eine Viskosität von weniger als $10^8$ Pa·s aufweisen.

Zwecks verbesserter Verarbeitungsfähigkeit von Kautschuken, beispielsweise dem Granulieren von Granulat aus großen Kautschukballen vor der Weiterverarbeitung in Mischern, werden dem Kautschuken häufig inerte Trennhilfsmittel wie Talkum, Silicate (Talk, Ton, Glimmer), Zinkstearat und PVC-Puder zugesetzt.

Sehr positiv verläuft das erfindungsgemäße Verfahren auch für solche Klebemassen, bei denen als nicht-thermoplastische Elastomere teilweise oder ausschließlich solche Nitrilkautschuke eingesetzt werden, die einen Acrylnitrilantreil von mindestens 25 %, bevorzugt von mindestens 30 %, sehr bevorzugt von mindestens 35 % besitzen. Solche Nitrilkautschuke besitzen recht polare Eigenschaften. Umso erstaunlicher war die Feststellung, dass sich ebenfalls sehr polare Epoxide (im Sinne der eingesetzten Reaktivharze) als Aufschlussmittel verwenden lassen, ohne dass es zu ungewünschten Wechselwirkungen oder Nebenreaktionen während des Aufschlusses kommt, ohne dass also das schlussendlich erforderliche Reaktivsystem beeinträchtigt oder gar zerstört werden würde. In hervorragender Weise können mit dem erfindungsgemäßen Verfahren auch solche Klebmassen hergestellt werden, bei denen der Nitrilkautschuk ein heißpolymerisierter Nitrilkautschuk ist. Solche Nitrilkautschuke sind hochverzweigt, besitzen daher eine besonders hohen Neigung zur physikalischen Anvernetzung und zeigen somit besonders gute Scherfestigkeiten auch im unausgehärteten Zustand.

Reaktivharze unterscheiden sich von für Klebmassen, insbesondere für Haftklebemassen, häufig eingesetzten Klebharzen. Unter einem "Klebharz" wird entsprechend dem allgemeinen Fachmannverständnis ein oligomeres oder polymeres Harz verstanden, das lediglich die Adhäsion (den Tack, die Eigenklebrigkeit) der Haftklebemasse im Vergleich zu der keinen Klebharz enthaltenden, ansonsten aber identischen Haftklebemasse erhöht. Typischerweise enthalten Klebharze außer Doppelbindungen (im Fall der ungesättigten Harze) keine reaktiven Gruppen, da sich ihre Eigenschaften über die Lebensdauer des Haftklebstoffes nicht ändern sollen. Für eher unpolare Haftklebemassen werden als Klebharze beispielsweise partiell oder vollständig hydrierte Harze auf Basis von Kolophonium und Kolophoniumderivaten, hydrierte Polymerisate des Dicyclopentadiens, partiell, selektiv oder vollständig hydrierte Kohlenwasserstoffharze auf Basis von C5-, C5/C9- oder C9-Monomerströmen, Polyterpenharze auf Basis von a-Pinen und/oder ß-Pinen und/oder $\delta$-Limonen und/oder $\Delta$3-Caren, hydrierte Polymerisate von bevorzugt reinen C8- und C9-Aromaten. Vorgenannte Klebharze können sowohl allein als auch im Gemisch eingesetzt. Für polare Haftklebemassen sind polare Harze als kompatibel dem Fachmann bekannt, beispielsweise Terpenphenol oder Kolophonium basierende Harze. Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester,

Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein. Auch Klebharze auf der Basis von Acrylaten und Methacrylaten sind bekannt. Auf die Darstellung des Wissensstandes im "Handbook of Pressure Sensitive Adhesive Technology" von Donatas Satas (van Nostrand, 1989) Kapitel 25 "Tackifier Resins" sei ausdrücklich hingewiesen.

Als Reaktivharz können dementgegen im Prinzip alle, dem Fachmann im Bereich der Haftklebemassen oder Reaktivklebstoffe bekannten, in einer Aufbaureaktion vernetzenden Makromoleküle bildenden reaktiven Konstituenten verwendet werden, wie sie zum Beispiel in Gerd Habenicht: Kleben -Grundlagen, Technologien, Anwendungen, 6. Auflage, Springer, 2009, beschrieben sind. Beispiel-haft tragen Reaktivharze Epoxid-, Hydroxy-, Amino-, Acrylat-, Methacrylat-, Styrol-, Thiol-, Isocyanat- oder Carboxylgruppen. Typischerweise werden zur Vernetzung von Reaktivharzen auf Basis von Polyaddition bzw. Polykondensationsreaktionen andere reaktive Gruppen tragende Moleküle - also Härter - benötigt. Vernetzende Reaktivharze enthalten insbesondere mindestens 2 reaktive Gruppen pro Molekül.

Als Reaktivharz zum Aufschluss der nicht-thermoplastischen Elastomere - insbesondere des oder der Nitrilkautschuke - in der Aufschlusszone kommt erfindungsgemäß zumindest ein Epoxidharz zum Einsatz.

Mit Epoxidharzen lassen sich Klebstoffe von besonders hoher Scherfestigkeit herstellen. Außerdem sind die Vernetzungsreaktionen gut initiier- und handhabbar. In ungehärtetem Zustand sind die unter Verwendung von Epoxidharzen hergestellten Klebemassen ausreichend lagerstabil. Dabei ist als Reaktivharz mindestens ein Epoxidharz auf Basis von Bisphenol-A, Bisphenol-S, Bisphenol-F, einem Epoxy-Novolak, einem Epoxy-Kresol-Novolak oder einem nitrilkautschuk-modifizierten Epoxidharz besonders bevorzugt, insbesondere sind Mischungen aus Epoxy-Kresol-Novolaken und NBR-modifizierten Epoxidharzen aufgrund der besonders ausgewogenen haftklebrigen Eigenschaften des unausgehärteten Haftklebstoffs kombiniert mit sehr guten Verklebungsfestigkeiten im ausgehärteten Zustand ganz besonders hervorzuheben. Zum Einstellen der Aushärtegeschwindigkeit können solchen besonders bevorzugten Kombinationen bis zu einem Drittel der Epoxidharzzusammensetzung flüssige Bisphenol-A-Diglycidylether begemischt werden.

Als besonders vorteilhaft hat es sich gezeigt, wenn die Reaktivharze, die in der Aufschlusszone zum Aufschluss der nicht-thermoplastischen Elastomere eingebracht werden, ganz oder zumindest zum wesentlichen Teil (insbesondere mehr als 50 %, mehr bevorzugt mehr als 75 %) solche Epoxidharze mit einer Erweichungstemperatur von mindestens 40 °C und/oder solche Reaktivharze mit einer Viskosität von mehr als 50 Pa·s bei Raumtemperatur sind. Diese Harze haben sich zum Aufschließen der nicht-thermoplastischen Elastomere - insbesondere der Nitrilkautschuke - als sehr vorteilhaft herausgestellt.

Epoxidharze, die in den Zusammensetzungen der Erfindung nützlich sind, sind beliebige organische Verbindungen mit wenigstens einem Oxiranring, die durch eine Ringöffnungsreaktion polymerisierbar sind. Solche Materialien, die allgemein als Epoxide bezeichnet werden, umfassen sowohl monomere als auch polymere Epoxide und können aliphatisch, cycloaliphatisch oder aromatisch sein. Diese Materialien weisen im Allgemeinen im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material dividiert durch die Gesamtanzahl an vorliegenden Epoxidmolekülen definiert. Die polymeren Epoxide umfassen lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder - copolymer). Die Molmasse (Zahlenmittel $M_n$) des epoxidhaltigen Materials kann von 58 bis etwa 100 000 g/mol oder mehr variieren. Mischungen aus verschiedenen epoxidhaltigen Materialien können auch in den Hotmelt-Zusammensetzungen der Erfindung verwendet werden. Nützliche epoxidhaltige Materialien umfassen jene, die Cyclohexenoxidgruppen, wie die Epoxycyclo-hexancarboxylate, die durch 3,4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylme-thyl)adipat exemplifiziert sind, enthalten. Für eine detailliertere Liste von nützlichen Epoxiden dieser Art kann auf U.S. Patent Nr. 3,117,099 verwiesen werden.

Weitere epoxidhaltige Materialien, die bei der Anwendung dieser Erfindung besonders nützlich sind, umfassen Glycidylethermonomere. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Weitere Beispiele von Epoxiden dieses Typs, die bei der Anwendung dieser Erfindung verwendet werden können, sind in US 3,018,262 A beschrieben.

Es gibt eine Vielzahl an im Handel erhältlichen epoxidhaltigen Materialien, die in dieser Erfindung verwendet werden können. Insbesondere umfassen Epoxide, die leicht erhältlich sind, Octadecylenoxid, Epichlorhydrin, Styroloxid, Vinylcyclohexenoxid, Glycidol, Glycidylmethacrylat, Diglycidylether von Bisphenol A (z. B. jene, die unter den Handelsbezeichnungen EPON 828, EPON 1004 und EPON 1001F von Shell Chemical Co. und DER-332 und DER-334 von Dow Chemical Co. erhältlich sind), Diglycidylether von Bisphenol F (z. B. ARALDITE GY281 von Ciba-Geigy), Vinylcyclohexendioxid (z. B. ERL 4206 von Union Carbide Corp.), 3,4-Ep-oxycyclohexylmethyl-3,4-epoxycyclohexencarboxylat (z. B. ERL-4221 von Union Carbide Corp.), 2-(3,4-Epo-xycyclohexyl-5,5-spiro-3,4-epoxy)cyclohexan-metadioxan (z. B. ERL-4234 von Union Carbide Corp.), Bis(3,4-epoxycyclohexyl)adipat (z. B. ERL-4299 von Union Carbide Corp.), Dipentendioxid (z. B. ERL-4269 von Union Carbide Corp.), epoxidiertes Polybutadien (z. B. OXIRON 2001 von FMC Corp.), silikon-harzhaltige Epoxidfunktionalität, Epoxysilane (z. B. beta-(3,4-Epoxycyclohexyl)ethyltrimethoxysilan und gamma-Glycido-xypropyltrimethoxysilan, im Handel erhältlich von Union Carbide), feuerhemmende Epoxidharze (z. B. DER-542, ein bromiertes bisphenolartiges Epoxidharz, erhältlich von Dow Chemical Co.), 1,4-Butandioldiglycidylether (z. B. ARALDITE RD-2 von Ciba-Geigy), hydrierte, auf Bisphenol A-Epichlorhydrin basierende Epoxidharze (z. B. EPONEX 1510 von Shell Chemical Co.) und Polyglycidylether von Phenolformaldehyd-Novolak (z. B. DEN-431 und DEN-438 von Dow Chemical Co.).

Besonders bevorzugt werden als Epoxidharze - insbesondere vorteilhaft in Kombination mit einem oder mehreren elastomermodifizierte und/oder silanmodifizierte und/oder fettsäuremodifizierte Epoxidharze eingesetzt.

Als elastomermodifizierte Epoxide im Sinne der vorliegenden Erfindung sind - insbesondere flüssige, in der Regel hochviskose - Epoxide mit einer mittleren Funktionalität von mindestens zwei und einem Elastomergehalt von bis zu 50 Gew.-%, vorzugsweise mit einem solchen von 5 bis 40 Gew. -%, zu verstehen. Die Epoxidgruppen können endständig und/oder in der Seitenkette des Moleküls angeordnet sein. Der elastomere Strukturanteil dieser flexibilisierten Epoxide besteht aus Polyenen, Dienmischpolymeren und Polyurethanen, vorzugsweise aus Polybutadien, Butadien-Styrol- oder Butadien-Acrylnitril-Mischpolymeren.

Ein durch Butadien-Acrylnitril-Copolymere (Nitrilkautschuk) modifizierte Epoxidharz ist beispielweise ein Epoxid-Vorpolymer, das durch Modifizierung eines Epoxidharzes, mit mindestens zwei Epoxidgruppen in den Molekülen, mit einem Nitrilkautschuk erhalten wird. Als Epoxidbasis wird vorteilhaft ein Reaktionsprodukt aus Glycerin oder Propylenglycol und einer halogenhaltigen Epoxidverbindung, wie Epichlorhydrin, oder das Reaktionsprodukt aus einem mehrwertigen Phenol, wie Hydrochinon, Bisphenol-A, und einem halogenhaltigen Epoxid verwendet. Wünschenswert ist ein Reaktionsprodukt aus einem Epoxidharz vom Bisphenol-A-Typ mit zwei endständigen Epoxidgruppen.

Zum Anbinden der Epoxidharze kann im Falle von Butadien-Polymeren oder Butadien-Acrylnitril-Copolymeren (sogenannte Nitrilkautschuke) ein drittes Monomer mit Säurefunktion - zum Beispiel Acrylsäure - mit einpolymerisiert werden, wodurch sogenannte carboxyterminierte-Nitrilkautschuke (CTBN) erhalten werden. In der Regel enthalten diese Verbindungen nicht nur an den Enden, sondern auch entlang der Hauptkette Säuregruppen. CTBN werden beispielweise unter dem Handelsnamen Hycar von der Firma B. F. Goodrich angeboten werden. Diese haben Molmassen zwischen 2000 und 5000 und Acrylnitrilgehalte zwischen 10 % und 30 %. Konkrete Beispiele sind Hycar CTBN 1300 x 8, 1300 x 13 oder 1300 x 15.

Entsprechend verläuft die Reaktion mit Butadien-Polymeren.

Durch Reaktion von Epoxidharzen mit CTBN werden sogenannte epoxy-terminierte-Nitrilkautschuke (ETBN) erhalten, die für diese Erfindung besonders bevorzugt verwendet werden. Kommerziell sind solche ETBN beispielsweise von der Firma Emerald Materials unter dem Namen HYPRO ETBN (vorher Hycar ETBN) —wie beispielsweise Hypro 1300X40 ETBN, Hypro 1300X63 ETBN und Hypro 1300X68 ETBN - erhältlich.

Ein Beispiel für einen epoxy-terminierten Butadienkautschuk ist Hypro 2000X174 ETB.

Weitere Beispiele für elastomer-modifizierte epoxy-funktionale Verbindungen sind ein Reaktionsprodukt eines Diglycidylethers von Neopentylalkohol und eines Butadien/Acrylnitril-Elastomers mit Carboxylenden (z. B. EPONTM Resin 58034 von Resolution Performance Products LLC), ein Reaktionsprodukt eines Diglycidylethers von Bisphenol-A und eines Butadien/Acrylnitril-Elastomers mit Carboxylenden (z. B. EPONTM Resin 58006 von Resolution Performance Products LLC), ein Butadien/Acrylnitril-Elastomer mit Carboxylenden (z. B. CTBN-1300X8 und CTBN-1300X13 von Noveon, Inc., Cleveland, Ohio) und ein Butadien/Acrylnitril-Elastomer mit Aminenden (z. B. ATBN-1300X16 und ATBN-1300X42 von Noveon, Inc.). Ein Beispiel für das elastomer-modifizierte Epoxidharzaddukt ist das Reaktionsprodukt eines Epoxidharzes auf Bisphenol-F-Basis und eines Butadien/Acrylnitril-Elastomers mit Carboxylenden (z. B. EPONTM Resin 58003 von Resolution Performance Products LLC).

Der Anteil der elastomer-modifizierten Epoxidharze bezogen auf die Gesamtmenge an Epoxidharzen kann zwischen 0 und 100 Gew.-% liegen. Für Verklebungen mit besonders hohen Verklebungsfestigkeiten und geringer Dehnung werden eher niedrigere Anteile - wie beispielsweise 0 bis 15 Gew.-% - gewählt. Im Gegensatz dazu werden Klebstoffe mit hohen Dehnungswerten erhalten, wenn der Anteil größer 40 Gew.-%, insbesondere größer 60 Gew.% ist. Für viele Anwendungen ist ein ausgewogenes Verhältnis zwischen Verklebungsfestigkeit und Dehnung gewollt. Hier sind Anteile zwischen 20 bis 60 Gew.-%, insbesondere 30 bis 50 Gew.-% bevorzugt. Je nach Anforderungsprofil kann es auch vorteilhaft sein, Klebstoffe mit einem Anteil bis 100 % zu realisieren.

Als weitere geeignete Vertreter für die Epoxidharze können sehr vorteilhaft silanmodifizierte Epoxidharze Es eingesetzt werden. Dabei kann ein einzelnes silanmodifiziertes Epoxidharz oder zwei, drei oder auch mehrere silanmodifizierte Epoxidharze Es in der härtbaren Zusammensetzung zugegen sein. Die härtbare Zusammensetzung kann auf das beziehungsweise die silanmodifizierbaren Epoxidharze als härtbare Reaktivharze beschränkt sein. Neben dem beziehungsweise den Epoxidharzen Es können aber auch weitere Epoxidharze zugegen sein, die nicht silanmodifiziert sind - beispielwiese elastomermodifizierte, insbesondere nitrilkautschukmodifizierte - Epoxidharze und/oder fettsäuremodifizierte Epoxidharze, wie im Einzelnen in dieser Schrift näher ausgeführt -, und/oder auch Reaktivharze, die keine Epoxidharze sind.

Ist ein einziges silanmodifiziertes Epoxidharz zugegen, so kann dieses insbesondere ausgewählt werden aus den nachfolgend als bevorzugt beschriebenen silanmodifizierten Epoxidharzen. Sind mehrere silanmodifizierte Epoxidharze zugegen, so ist vorteilhaft zumindest eines der Epoxidharze eines der im Folgenden als bevorzugte silanmodifizierten Epoxidharze beschriebenen Verbindungen. Weiter bevorzugt sind alle silanmodifizierten Epoxidharze solche, wie sie im Folgenden als bevorzugt beschrieben sind.

Die chemische Modifizierung von Epoxidharzen kann zur Steuerung der Eigenschaften von Klebstoffen genutzt werden. Erfindungsgemäße modifizierte Epoxidharze sind insbesondere ausgewählt aus silanmodifizierten Epoxidharzen. Silangruppenmodifizierte Epoxidharze sind solche Epoxidharze, an die eine oder mehrere Silangruppen chemisch gebunden sind.

Prinzipiell gibt es verschiedene Wege, Silangruppen chemisch an Epoxidharze zu binden.

In einer bevorzugten Vorgehensweise wird als Epoxidharz ein solches silanmodifiziertes Epoxidharz eingesetzt, das durch Dealkoholisierungs-Kondensationsreaktion zwischen einem Bisphenol-Epoxidharz (1) und einem hydrolysierbaren Alkoxysilan (2) erhältlich ist. Derartige Epoxidharze sind beispielsweise in der EP 1114834 A beschrieben, deren Offenbarungsgehalt durch Referenz in die vorliegende Schrift einbezogen sein soll.

Das Bisphenol-Epoxidharz (1) kann in vorteilhafter Weise derart gewählt werden, dass es ein Epoxy-Äquivalentgewicht von mehr als 180 g/eq, und bevorzugt von weniger als 5000 g/eq, hat. Für Epoxidharze oder Epoxid-Vernetzer ist das Epoxid-Äquivalentgewicht (Abkürzung EEW) eine charakteristische und wichtige Größe. Nach DIN EN ISO 3001:1999-11 gibt das Epoxid-Äquivalentgewicht den pro Epoxid-Gruppe verbundenen Festkörper des betreffenden Stoffes in Gramm an. Es werden bevorzugt Epoxidharze mit einem EEW > 180 g/eq eingesetzt, da sonst gegebenenfalls nicht ausreichend Hydroxygruppen für die Kondensationsreaktion mit den Alkoxysilanen vorhanden sind.

In bevorzugter Weise werden als Bisphenol-Epoxidharz (1) Verbindungen entsprechend der folgenden Formel

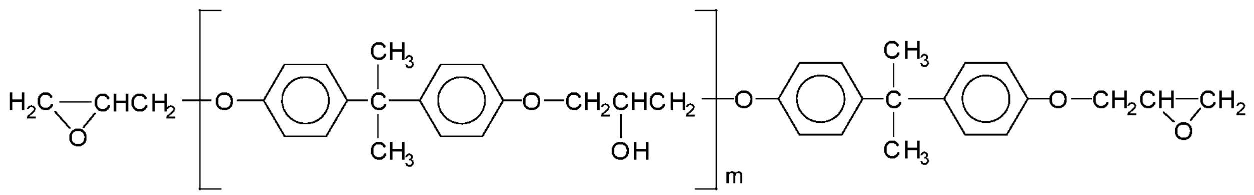

(IV)

eingesetzt. In der Regel handelt es sich dabei um eine Mischung entsprechender Verbindungen der Formel (IV) mit variierender Wiederholungszahl m der Einheit in der eckigen Klammer. Dabei wird das Bisphenol-Epoxidharz insbesondere derart gewählt, dass der Durchschnitt von m 0,07 bis 16,4, ist die zahlenmittleren Molmassen $M_n$ also zwischen etwa 350 g/mol und 4750 g/mol liegen.

In weiter bevorzugter Weise ist das hydrolysierbare Alkoxysilan (2) entweder eine Verbindung entsprechend der allgemeinen Formel

$$R^{10}{}_pSi(OR^{11})_{4-p} \qquad (V)$$

wobei p 0 oder 1 ist, $R^{10}$ eine C-C Alkylgruppe, eine Arylgruppe oder eine ungesättigte aliphatische Kohlenwasserstoffgruppe ist, die eine direkt an ein Kohlenstoffatom gebundene funktionelle Gruppe aufweisen kann, $R^{11}$ ein Wasserstoffatom oder eine Niederalkylgruppe darstellt, und die Reste $R^{11}$ gleich oder verschieden sein können, oder das hydrolysierbare Alkoxysilan (2) ist ein partielles Kondensat der genannten Verbindung. Die direkt an ein Kohlenstoffatom gebundene funktionelle Gruppe kann beispielsweise eine Vinylgruppe, Mercaptogruppe, Epoxygruppe, Glycidoxygrupppe usw. sein. Die Niederalkylgruppe kann beispielsweise eine unverzweigte oder eine verzweigte Alkylgruppe mit 6 oder weniger Kohlenstoffatomen sein.

Beispiele des hydrolysierbaren Alkoxysilans (2) umfassen Tetramethoxysilan, Tetraethoxysilan, Tetrapropoxysilan, Tetraisopropoxysilan, Tetrabuthoxysilan und ähnliche Tetraalkoxysilane; Methyltrimethoxysilan, Methyltriethoxysilan, Methyltripropoxysilan, Methyltributhoxysilan, Ethyltrimethoxysilan, Ethyltriethoxysilan, n-Propyltrimethoxysilan, n-Propyltriethoxysilan, Isopropyltrimethoxysilan, Isopropyltriethoxysilan, Vinyltrimethoxysilan, Vinyltriethoxysilan, 3-Glycidoxypropyltrimethoxysilan, 3-Glycidoxypropyltriethoxysilan, 3-Mercaptopropyltrimethoxy-silan, 3-Mercaptopropyltriethoxysilan, Phenyltrimethoxysilan, Phenyltriethoxysilan, 3,4-Epoxy-cyclohexylethyltrimethoxysilan, 3,4-Epoxycyclohexylethyltrimethoxysilan und ähnliche Trialkoxysilane; oder partielle Kondensate dieser Verbindungen.

Unter diesen Verbindungen werden Tetramethoxysilan, Tetraethoxysilan und ähnliche Tetraalkoxysilane oder partielle Kondensate davon bevorzugt. Besonders bevorzugt ist Poly(tetramethoxysilan), das ein partielles Kondensat von Tetramethoxysilan ist, dargestellt durch die Formel

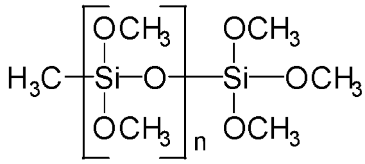

(VI)

(wobei der Durchschnitt von n 1 bis 7 beträgt). Das Poly(tetramethoxysilan), das durch die Formel (VI) dargestellt ist, kann ein Molekül enthalten, in dem n 0 ist, soweit der Durchschnitt von n 1 oder größer ist. Die zahlenmittlere Molmasse $M_n$ des Poly(tetramethoxysilans) beträgt vorzugsweise etwa 260 bis etwa 1200. Außerdem ist Poly(tetramethoxysilan) im Gegensatz zu Tetramethoxysilan nicht toxisch.

In einer weiteren bevorzugten Vorgehensweise wird als Epoxidharz ein solches silanmodifiziertes Epoxidharz eingesetzt, das durch Modifizierung von Bisphenol-Diglycidylether mit Alkoxysilanen, die eine Epoxidgruppe tragen, erhältlich ist. Derartige silanmodifizierte Epoxide sowie deren Herstellungsverfahren ist in der US 8,835,574 A beschrieben, deren Offenbarungsgehalt ebenfalls per Referenz in diese Schrift einbezogen wird. Bei dem dort geschilderten Verfahren wird zunächst das Epoxy-Alkoxysilan in Gegenwart von Wasser teilhydrolysiert und teilkondensiert. In einem zweiten Schritt wird ein Bisphenol-Diglycidylether zugegeben und an das Siloxan-Teilkondensat gebunden.

Eine nächste vorteilhafte Methode zum Erhalt erfindungsgemäß vorteilhaft einsetzbarer silanmodifizierter Epoxidharze zeigt die EP 2 799 509 A, deren Offenbarungsgehalt ebenfalls per Referenz in diese Schrift einbezogen wird. Im Gegensatz zu dem vorigen Prozess werden die Alkoxygruppen nicht in einem vorgelagerten Schritt teilkondensiert. Die Anbindung der Alkoxysilane erfolgt an aliphatische Hydroxygruppen der Epoxidharze. Diese Schrift nennt als kommerzielle Beispiele KSR-176, KSR-177, KSR-276, KSR-900 von Kukdo Chemical Co. Ltd. Diese Verbindungen sind im Rahmen der vorliegend dargestellten Erfindung hervorragend als silanmodifizierte Epoxidharze einsetzbar.

In einer weiteren Syntheseroute von erfindungsgemäß vorteilhaft einsetzbaren silanmodifizierten Epoxidharzen $E_S$ werden Alkoxysilane, die eine Isocyanatgruppe enthalten, an die aliphatischen Hydroxygruppen unter Ausbildung einer Urethangruppe gebunden.

Als Epoxidharze lassen sich erfindungsgemäß weiterhin sehr vorteilhaft fettsäuremodifizierte Epoxide einsetzen.

Als fettsäuremodifizierte Epoxidharze werden bevorzugt Epoxidharzester, auch als Epoxyester bezeichnet, eingesetzt, also die Veresterungsprodukte von Epoxidharzen (1) mit gesättigten oder ungesättigten Fettsäuren (2).

Es können ein einzelnes fettsäuremodifiziertes Epoxidharz oder zwei, drei oder auch mehrere fettsäuremodifizierte Epoxidharze in der härtbaren Zusammensetzung zugegen sein. Die härtbare Zusammensetzung kann auf das beziehungsweise die fettsäuremodifizierbaren Epoxidharze als härtbare Reaktivharze beschränkt sein. Neben dem beziehungsweise den fettsäuremodifizierten Epoxidharzen können aber auch weitere Epoxidharze zugegen sein, die nicht fettsäuremodifiziert sind - beispielweise elastomermodifizierte, insbesondere nitrilkautschukmodifizierte - Epoxidharze und/oder silanmodifizierte Epoxidharze, wie im einzelnen in dieser Schrift näher ausgeführt -, und/oder auch Reaktivharze, die keine Epoxidharze sind.

Ist ein einziges fettsäuremodifiziertes Epoxidharz zugegen, so kann dieses insbesondere ausgewählt werden aus den nachfolgend als bevorzugt beschriebenen fettsäuremodifizierten Epoxidharzen. Sind mehrere fettsäuremodifizierte Epoxidharze zugegen, so ist vorteilhaft zumindest eines der Epoxidharze eines der im folgenden als bevorzugte fettsäuremodifizierten Epoxidharze beschriebenen Verbindungen. Weiter bevorzugt sind alle fettsäuremodifizierten Epoxidharze solche, wie sie im folgenden als bevorzugt beschrieben sind.

Die chemische Modifizierung von Epoxidharzen kann zur Steuerung der Eigenschaften von Klebstoffen genutzt werden. Erfindungsgemäße modifizierte Epoxidharze sind insbesondere ausgewählt aus fettsäuremodifizierten Epoxidharzen. Fettsäuregruppenmodifizierte Epoxidharze sind solche Epoxidharze, an die eine oder mehrere Fettsäuren insbesondere durch Veresterungsreaktionen chemisch gebunden sind.

Als Epoxidharz-Basis für die fettsäuremodifizierten Epoxidharze, insbesondere Epoxyester, können insbesondere Epoxidharze vom Typ Bisphenol A/Epichlorhydrin entsprechend der oben bereits eingeführten allgemeinen Formel

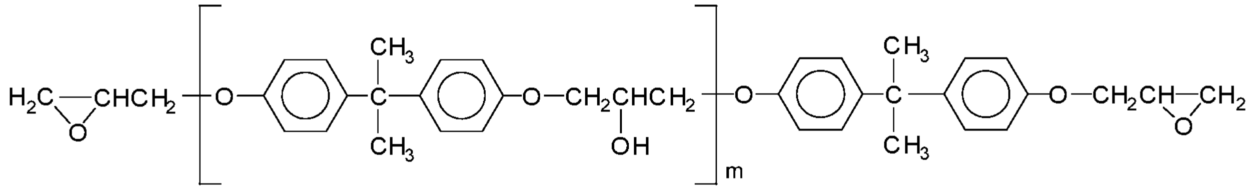

(IV)

dienen. Als Basis für die fettsäuremodifizierten Epoxide wird das Bisphenol-Epoxidharz der Formel (IV) insbesondere derart gewählt, dass der Durchschnitt von m = 0,07 bis 16,4 ist, die zahlenmittleren Molmassen $M_n$ also zwischen etwa 350 g/mol und 4750 g/mol liegen. Besonders bevorzugt werden Verbindungen der Formel 1 mit m = 2,3 bis m = 10 in reiner Form (mit ganzzahligen Werten für m) oder in Form von Mischungen eingesetzt (entsprechend zahlenmittlerer Molmassen $M_n$ zwischen etwa 1000 und etwa 3000 g/mol).

Sowohl die terminalen Epoxidgruppen, als auch die sekundären Hydroxygruppen von Bisphenol-basierten Epoxidharzen können mit Fettsäuren reagieren. Bei der Veresterung werden üblicherweise zunächst die beiden Epoxid-Ringe geöffnet, dann erfolgt die Reaktion der Hydroxy-Gruppen.

Hierbei ist jede Epoxygruppe äquivalent zu 2 Hydroxygruppen, da nach der Reaktion einer Säuregruppe mit einem Epoxid ein β-Hydroxyester entsteht. Diese β-Hydroxygruppen können auch mit Fettsäuren reagieren. Die Herstellung erfolgt typischerweise bei Temperaturen von 240 - 260°C unter Schutzgasatmosphäre, bevorzugt unter azeotropen Bedingungen, um das freiwerdende Reaktionswasser zu entfernen. Optional wird die Reaktion durch Zugabe von Katalysatoren wie beispielsweise Calcium oder Zinkseifen von zum Beispiel Fettsäuren wie Stearinsäure beschleunigt. Je nach gewünschter Eigenschaft werden 40 bis 80 % der verfügbaren funktionellen Gruppen des Epoxidharzes mit Fettsäuren umgesetzt.

Ein Epoxidharz vom Typ n (entspricht der Anzahl freier OH-Gruppen entlang der Kette) kann im Mittel theoretisch maximal n + 4 Fettsäure-Moleküle pro Epoxidharz-Molekül binden (Veresterungsgrad 100%). Demgemäß ist bei Epoxidharzestern die "Öllänge" wie folgt definiert:

kurzölig: Veresterungsgrad 30-50 %;
mittelölig: Veresterungsgrad 50-70%;
langölig: Veresterungsgrad 70-90%.

Als Fettsäuren für die Veresterung sind beispielsweise Kokosölfettsäure, Ricinenfettsäure (Fettsäure des dehydratisierten Ricinusöls), Leinölfettsäure, Sojaölfettsäure oder Tallölfettsäure erfindungsgemäß gut geeignet.

Weitere erfindungsgemäß vorteilhafte Fettsäuren sind α-Linolensäure, Stearidonsäure, Eicosapentaensäure, Docosahexaensäure, Linolsäure, γ-Linolensäure, Dihomogammlinolensäure, Arachidonsäure, Docosa-7,10,13,16-tetrain-1-Säure, Palmitoleinsäure, Vaccensäure, Ölsäure, Elaidinsäure, Gadoleinsäure, 13-Eicosensäure, Erucasäure, Nervonsäure, Stearinsäure, Mead'sche Säure.

Auch Dimere und Oligomere von ungesättigten Fettsäuren sind einsetzbar, beispielweise die Dimeren von Tallölfettsäuren.

In der Regel wird nur ein Teil der Reaktivharze, die schlussendlich in der resultierenden Klebmasse als Teil des Reaktivklebstoffs vorliegen, zum Aufschluss der nicht-thermoplastischen Elastomere in der Aufschlusszone genutzt werden. Die Zugabe weiterer Mengen an Reaktivharzen im Verlaufe des Herstellverfahrens wird sich nur dann erübrigen, wenn das Verhältnis von Reaktivharzen zu Elastomeren in der in der Aufschlusszone hergestellten Compoundiermasse gerade demjenigen in der resultierenden Klebmasse entspricht.

Üblicherweise wird es aber erforderlich sein, zur Herstellung der schlussendlichen Klebmasse jedoch noch weitere Reaktivharze zuzumischen. Dies kann beispielsweise in einer oder in mehreren oder auch in allen der Füllzone oder der Aufschlusszone nachfolgenden Compoundierzonen des Mehrwellenextruders geschehen - insbesondere bevorzugt ebenfalls jeweils kontinuierlich über weitere Einlassvorrichtungen -, so dass die Klebmasse bei Verlassen des Extruders bereits die gewünschte Zusammensetzung aufweist. Die Zudosierung weiterer Reaktivharzmengen kann alternativ oder zusätzlich auch in einem oder in mehreren dem Mehrwellenextruder nachgeschalteten Mischaggregaten zugegeben werden.

Grundsätzlich können die weiteren zuzusetzenden Reaktivharze dieselben sein, wie sie bereits zum Aufschluss verwendet worden sind, oder denselben Substanzklassen entnommen worden sein. Dies kann insbesondere interessant sein, wenn die Klebmasse beispielsweise nur eine Sorte an Epoxidharzen oder eine begrenzte Anzahl unterschiedlicher

Epoxidharze aufweisen soll.

Nach dem Aufschluss ist die Verarbeitbarkeit der ursprünglich nicht-thermoplastischen Elastomere, insbesondere der Nitrilkautschuke, erheblich verbessert. Dies eröffnet die Möglichkeit, auch andere Epoxidharze oder gänzlich andere Reaktivharze zuzumischen, um der Klebmasse eine gewünschte Zusammensetzung zu geben. So können die in späteren Zugabeschritten beigemischten Reaktivharze sich komplett von denen unterscheiden, die zum Aufschluss in der Aufschlusszone eingesetzt wurden. Hierdurch lassen sich vielfältige Variationen der gewünschten Klebmasse realisieren, ohne das erfindungsgemäße Verfahren durch zu beeinträchtigen. Durch die Möglichkeit, die einzelnen Compoundierzonen des Mehrwellenextruders unabhängig voneinander auszugestalten und/oder zu temperieren, können in den der Aufschlusszone nachfolgenden Compoundierzonen gegebenenfalls auch Verarbeitungsbedingungen realisiert werden, die für einen Aufschluss nicht geeignet wären. Gleiches gilt für nachgeschaltete Mischaggregate. Hierdurch lassen sich beispielsweise gezielt Reaktivharze einmischen, die beispielsweise zur Justierung der Viskosität beziehungsweise der Kohäsion der resultierende Klebemasse dienen sollen, oder beispielsweise auch sehr reaktiver Reaktivharze, insbesondere wenn die vorherrschenden Compoundierungsbedingungen bei deren Beifügung moderat gewählt werden.

## Härter

Die Klebemasse des erfindungsgemäßen Klebebandes enthält mindestens einen Härter. Härter sind beispielsweise aliphatische Amine, aromatische Amine, modifizierte Amine, Polyamidharze, Säureanhydride, sekundäre Amine, Mercaptane insbesondere Polymercaptane, Polysulfide, Dicyandiamid, organische Säurehydrazide oder Reaktionsprodukte aus Disäuren und multifunktionellen Aminen, insbesondere Reaktionsprodukte aus Pthalsäure und Diethylentriamin.

Besonders bevorzugt werden erfindungsgemäß aminische Härter, insbesondere Dicyandiamid, für die oben beschriebenen Reaktivkomponenten auf Epoxidbasis eingesetzt. In diesem Fall ist die Menge des Härters abhängig von der Epoxidmenge und den Epoxidäquivalenten des verwendeten Epoxides. Die Berechnung erfolgt analog zu der dem Fachmann bekannten Berechnung über Epoxyäquivalente und Aminäquivalente des Aktivators und ist beispielsweise in "Formulierung von Kleb- und Dichtstoffen" von Bodo Müller und Walter Rath (Kapitel 2.2.2) beschrieben. Für das hier verwendete Dicyandiamid Dyhard 100S wurde ein Aminäquivalent von 13 g/eq verwendet.

Initiatoren zur Initiation einer ringöffnenden Polymerisation von Epoxiden sind beispielsweise Imidazole, Bortrifluorid-Aminkomplexe, tertiäre Amine, amin- beziehungsweise ammoniumgeblockte thermische Säurespender wie Tetrabutylammonium triflat, Ammonium triflat, amingeblockte Dodecylbenzylsulfonsäure, Lanthanid Triflate wie Ytterbium (III), Samarium (III), Cer (III), Erbium (III), Lanthan (III) und Dysprosium (III) trifluoromethansulfonat

Unter den Initiatoren für eine kationische UV induzierte Härtung sind insbesondere Sulfonium, Iodonium und Metallocen basierende Systeme einsetzbar. Als Beispiele für Sulfonium basierende Kationen sei auf die Ausführungen in US 6,908,722 B1 (insbesondere Spalten 10 bis 21) verwiesen.

Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Ferner sind insbesondere für Iodonium-basierende Initiatoren auch Chlorid, Bromid oder Iodid als Anionen denkbar, wobei aber Initiatoren, die im Wesentlichen frei von Chlor und Brom sind, bevorzugt sind.

Konkreter zählen zu den einsetzbaren Systemen

- Sulfonium-Salze (siehe zum Beispiel US 4,231,951 A, US 4,256,828 A, US 4,058,401 A, US 4,138,255 A und US 2010/063221 A1) wie Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Chlorophenyldiphenylsulfoniumhexafluoroantimonat, Tris-(4-phenoxyphenyl)-sulfoniumhexafluorophosphat, Di-(4-ethoxyphenyl)-methylsulfoniumhexafluoroarsenat, 4-Acetylphenyldiphenylsulfoniumtetrafluoroborat, 4-Acetylphenyldiphenylsulfoniumtetrakis-(pentafluorobenzyl)-borat, Tris-(4-thiomethoxyphenyl)-sulfoniumhexafluorophosphat, Di-(methoxysulfonylphenyl)-methylsulfoniumhexafluoroantimonat, Di-(methoxynaphthyl)-methylsulfoniumtetrafluoroborat, Di-(methoxynaphthyl)-methylsulfoniumetrakis-(pentafluorobenzyl)-borat, Di-(carbomethoxyphenyl)-methylsulfoniumhexafluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecylphenyl)-sulfoniumtetrakis-(3,5-bis-trifluoromethylphenyl)-borat, 4-Acetamidphenyldiphenylsulfoniumtetrafluoroborat, 4-Acetamidphenyldiphenylsulfoniumtetrakis-(pentafluorobenzyl)-borat, Dimethylnaphthylsulfoniumhexafluorophosphat, Trifluoromethyldiphenylsulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexafluorophosphat, 10-Phenyl-9,9-dimethylthioxantheniumhexafluorophosphat, 10-Phenyl-9-oxothioxantheniumtetrafluoroborat, 10-Phenyl-9-oxothioxantheniumtetrakis-(pentafluorobenzyl)-borat, 5-Methyl-10-oxothianthreniumtetrafluoroborat, 5-Methyl-10-oxothianthreniumtetrakis-(pentafluorobenzyl)-borat und 5-Methyl-10,10-dioxothianthreniumhexafluorophosphat,

- Iodonium-Salze (siehe zum Beispiel US 3,729,313 A, US 3,741,769 A, US 4,250,053 A, US 4,394,403 A und US 2010/063221 A1) wie

  Diphenyliodoniumtetrafluoroborat,
  Di-(4-methylphenyl)-iodoniumtetrafluoroborat,
  Phenyl-4-methylphenyliodoniumtetrafluoroborat,
  Di-(4-chlorphenyl)-iodoniumhexafluorophosphat, Dinaphthyliodoniumtetrafluoroborat,
  Di-(4-trifluormethylphenyl)-iodoniumtetrafluoroborat,
  Diphenyliodoniumhexafluorophosphat,
  Di-(4-methylphenyl)-iodoniumhexafluorophosphat, Diphenyliodoniumhexafluoroarsenat,
  Di-(4-phenoxyphenyl)-iodoniumtetrafluoroborat,
  Phenyl-2-thienyliodoniumhexafluorophosphat,
  3,5-Dimethylpyrazolyl-4-phenyliodoniumhexafluorophosphat,
  Diphenyliodoniumhexafluoroantimonat,
  2,2'-Diphenyliodoniumtetrafluoroborat,
  Di-(2,4-dichlorphenyl)-iodoniumhexafluorophosphat,
  Di-(4-bromphenyl)-iodoniumhexafluorophosphat,
  Di-(4-methoxyphenyl)-iodoniumhexafluorophosphat,
  Di-(3-carboxyphenyl)-iodoniumhexafluorophosphat,
  Di-(3-methoxycarbonylphenyl)-iodoniumhexafluorophosphat,
  Di-(3-methoxysulfonylphenyl)-iodoniumhexafluorophosphat,
  Di-(4-acetamidophenyl)-iodoniumhexafluorophosphat,
  Di-(2-benzothienyl)-iodoniumhexafluorophosphat,
  Diaryliodoniumtristrifluormethylsulfonylmethid wie
  Diphenyliodoniumhexafluoroantimonat,
  Diaryliodoniumtetrakis-(pentafluorophenyl)-borat wie
  Diphenyliodoniumtetrakis-(pentafluorophenyl)-borat,,
  (4-n-Desiloxyphenyl)-phenyliodoniumhexafluoroantimonat,
  [4-(2-Hydroxy-n-tetradesiloxy)-phenyl]-phenyliodoniumhexafluoroantimonat,
  [4-(2-Hydroxy-n-tetradesiloxy)-phenyl]-phenyliodoniumtrifluorosulfonat,
  [4-(2-Hydroxy-n-tetradesiloxy)-phenyl]-phenyliodoniumhexafluorophosphat,
  [4-(2-Hydroxy-n-tetradesiloxy)-phenyl]-phenyliodoniumtetrakis-(pentafluorophenyl)-borat,
  Bis-(4-tert-butylphenyl)-iodoniumhexafluoroantimonat,
  Bis-(4-tert-butylphenyl)-iodoniumhexafluorophosphat,
  Bis-(4-tert-butylphenyl)-iodoniumtrifluorosulfonat,
  Bis-(4-tert-butylphenyl)-iodoniumtetrafluoroborat,
  Bis-(dodecylphenyl)-iodoniumhexafluoroantimonat,
  Bis-(dodecylphenyl)-iodoniumtetrafluoroborat,
  Bis-(dodecylphenyl)-iodoniumhexafluorophosphat,
  Bis-(dodecylphenyl)-iodoniumtrifluoromethylsulfonat,
  Di-(dodecylphenyl)-iodoniumhexafluoroantimonat,
  Di-(dodecylphenyl)-iodoniumtriflat,
  Diphenyliodoniumbisulfat,
  4,4'-Dichlorodiphenyliodoniumbisulfat, 4,4'-Dibromodiphenyliodoniumbisulfat,
  3,3'-Dinitrodiphenyliodoniumbisulfat, 4,4'-Dimethyldiphenyliodoniumbisulfat,
  4,4'-Bis-succinimidodiphenyliodoniumbisulfat, 3-Nitrodiphenyliodoniumbisulfat, 4,4'-Dimethoxydiphenyliodoniumbisulfat,
  Bis-(dodecylphenyl)-iodoniumtetrakis-(pentafluorophenyl)-borat,

(4-Octyloxyphenyl)-phenyliodoniumtetrakis-(3,5-bis-trifluoromethylphenyl)-borat und (Tolylcumyl)-iodoniumtetrakis-(pentafluorophenyl)-borat,

und

- Ferrocenium-Salze (siehe zum Beispiel EP 0 542 716 B1) wie η5-(2,4-cyclopentadien-1-yl)-[( 1,2,3,4,5,6,9)-(1-methylethyl)-benzol]-eisen.

Beispiele für kommerzialisierte Photoinitiatoren sind Cyracure UVI-6990, Cyracure UVI-6992, Cyracure UVI-6974 und Cyracure UVI-6976 der Firma Union Carbide, Optomer SP-55, Optomer SP-150, Optomer SP-151, Optomer SP-170 und Optomer SP-172 der Firma Adeka, San-Aid SI-45L, San-Aid SI-60L, San-Aid SI-80L, San-Aid SI-100L, San-Aid SI-110L, San-Aid SI-150L und San-Aid SI-180L der Firma Sanshin Chemical, SarCat CD-1010, SarCat CD-1011 und SarCat CD-1012 der Firma Sartomer, Degacure K185 der Firma Degussa, Rhodorsil Photoinitiator 2074 der Firma Rhodia, CI-2481, CI-2624, CI-2639, CI-2064, CI-2734, CI-2855, CI-2823 und CI-2758 der Firma Nippon Soda, Omnicat 320, Omnicat 430, Omnicat 432, Omnicat 440, Omnicat 445, Omnicat 550, Omnicat 550 BL und Omnicat 650 der Firma IGM Resins, Daicat II der Firma Daicel, UVAC 1591 der Firma Daicel-Cytec, FFC 509 der Firma 3M, BBI-102, BBI-103, BBI-105, BBI-106, BBI-109, BBI-110, BBI-201, BBI, 301, BI-105, DPI-105, DPI-106, DPI-109, DPI-201, DTS-102, DTS-103, DTS-105, NDS-103, NDS-105, NDS-155, NDS-159, NDS-165, TPS-102, TPS-103, TPS-105, TPS-106, TPS-109, TPS-1000, MDS-103, MDS-105, MDS-109, MDS-205, MPI-103, MPI-105, MPI-106, MPI-109, DS-100, DS-101, MBZ-101, MBZ-201, MBZ-301, NAI-100, NAI-101, NAI-105, NAI-106, NAI-109, NAI-1002, NAI-1003, NAI-1004, NB-101, NB-201, NDI-101, NDI-105, NDI-106, NDI-109, PAI-01, PAI-101, PAI-106, PAI-1001, PI-105, PI-106, PI-109, PYR-100, SI-101, SI-105, SI-106 und SI-109 der Firma Midori Kagaku, Kayacure PCI-204, Kayacure PCI-205, Kayacure PCI-615, Kayacure PCI-625, Kayarad 220 und Kayarad 620, PCI-061T, PCI-062T, PCI-020T, PCI-022T der Firma Nippon Kayaku, TS-01 und TS-91 der Firma Sanwa Chemical, Deuteron UV 1240 der Firma Deuteron, Tego Photocompound 1465N der Firma Evonik, UV 9380 C-D1 der Firma GE Bayer Silicones, FX 512 der Firma Cytec, Silicolease UV Cata 211 der Firma Bluestar Silicones und Irgacure 250, Irgacure 261, Irgacure 270, Irgacure PAG 103, Irgacure PAG 121, Irgacure PAG 203, Irgacure PAG 290, Irgacure CGI 725, Irgacure CGI 1380, Irgacure CGI 1907 und Irgacure GSID 26-1 der Firma BASF.

Dem Fachmann sind weitere Systeme bekannt, die ebenfalls erfindungsgemäß einsetzbar sind. Photoinitiatoren werden unkombiniert oder als Kombination von zwei oder mehreren Photoinitiatoren eingesetzt.

In einer besonders bevorzugten Ausführung der Erfindung wird als Härter zumindest ein Epoxy-Amin-Addukt, das das Reaktionsprodukt aus (a) einer polyfunktionellen Epoxidkomponente A, (b) einer Verbindung B mit sowohl einer OH-Gruppe, NH2-Gruppe, NH-Gruppe oder SH-Gruppe als auch einer tertiären Aminogruppe im Molekül und (c) einem Carboxylsäureanhydrid C ist, eingesetzt.

Das Epoxy-Amin-Addukt kann als alleiniger Härter, in Kombination mit weiteren Epoxy-Amin-Addukten - und zwar solchen, die ebenfalls das Reaktionsprodukt aus (a) einer polyfunktionellen Epoxidkomponente A, (b) einer Verbindung B mit sowohl einer OH-Gruppe, NH2-Gruppe, NH-Gruppe oder SH-Gruppe als auch einer tertiären Aminogruppe im Molekül und (c) einem Carboxylsäureanhydrid C sind, und/oder mit solchen, die diese Bedingung nicht erfüllen - und/oder in Kombination mit Härtern, die keine Epoxy-Amin-.Addukte sind, eingesetzt werden.

Das Epoxy-Amin-Addukt dient dabei im alleinigen Einsatz als Härter für die Härtungsreaktion der härtbaren Zusammensetzung. Wird es zusammen mit weiteren, als Härter und/oder Beschleuniger dienenden chemischen Verbindungen eingesetzt, kann es selbst als Härter oder als Beschleuniger für die Härtungsreaktion der härtbaren Zusammensetzung dienen.

In besonders bevorzugter Form wird das Epoxy-Amin-Addukt, beziehungsweise werden bei Anwesenheit mehrerer Epoxy-Amin-Addukte alle Epoxy-Amin-Addukte, in partikulärer Form eingesetzt wird. Dies lässt sich beispielweise dadurch realisieren, dass das Epoxy-Amin-Addukt in keiner anderen Komponente des Klebebandes löslich ist, insbesondere nicht einmal teillöslich ist.

Der Einsatz des Härters in ungelöster beziehungsweise partikulärer Form führt zu einem zumindest zweiphasigen System und damit zu einer erhöhten Lagerstabilität der härtbaren Zusammensetzung.

Das Epoxy-Amin-Addukt, bei mehreren anwesenden Epoxy-Amin-Addukten eines, mehrere oder bevorzugt alle Epoxy-Amin-Addukte können vorteilhaft in Form einer der nachfolgend als besonders vorteilhaft dargestellten Verbindungen eingesetzt werden, wobei bei Anwesenheit mehrerer Epoxy-Amin-Addukte die einzelnen Vertreter unabhängig voneinander ausgewählt werden können.

Die polyfunktionelle Epoxidkomponente A kann beispielsweise ein Polyglycidylether, ein Polyglycidyletherester, ein Polyglycidylester, ein Glycidylamin ein epoxidierter Novolak oder ein epoxidiertes Polyolefin sein.

Als Verbindung B lassen sich vorteilhaft Verbindungen der allgemeinen Formel

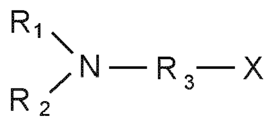

(I)

einsetzen, wobei

X gleich -OH, -NH2, -NH oder -SH ist,
R1 und R2 unabhängig voneinander gewählt sind aus der Gruppe aus

- Wasserstoffatomen,
- C1- bis C20-Alkylgruppen,
- C2- bis C20-Alkenylgruppen,
- unsubstituierten aromatischen Kohlenwasserstoffgruppen
- substituierten aromatischen Kohlenwasserstoffgruppen, insbesondere substituiert mit Sauerstoff, Halogen, -OH, -NH2, -NH und/oder-SH,

R3 eine gesättigte oder ungesättigte, unverzweigte oder verzweigte Kohlenwasserstoffkette mit 1 bis 20 C-Atomen ist.

Weiter vorteilhaft lassen sich als Verbindung B Verbindungen der allgemeinen Formel

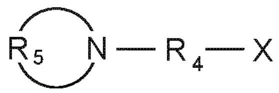

(IIa)

oder

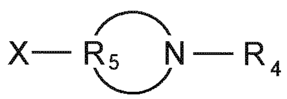

(IIb)

wählen, wobei

X gleich -OH, -NH2, -NH oder -SH ist,
R4 eine gesättigte oder ungesättigte, unverzweigte oder verzweigte Kohlenwasserstoffkette mit einem bis 20 C-Atomen ist,
R5 ein cylischer, zweifach an das Stickstoffatom gebundener, aliphatischer oder aromatischer; gesättigter oder ungesättigter; unsubstituierter oder substituierter Kohlenwasserstoffrest mit 2 bis 20 C-Atomen, die teilweise durch Heteroatome substituiert sein können, ist.

Insbesondere vorteilhaft lassen sich als Verbindung B Verbindungen der allgemeinen Formel

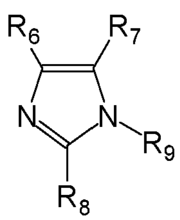

(III)

einsetzen, wobei

R6, R7, R8 und R9 unabhängig voneinander gewählt sind aus der Gruppe aus

- Wasserstoffatomen,
- C1- bis C20-Alkylgruppen,

- C2- bis C20-Alkenylgruppen,
- unsubstituierten aromatischen Kohlenwasserstoffgruppen
- substituierten aromatischen Kohlenwasserstoffgruppen, insbesondere substituiert mit Sauerstoff, Halogen, -OH, -NH2, -NH und/oder -SH,
- -OH, -NH2, -NH und/oder -SH,

mit der Maßgabe, dass
R9 = H oder dass mindestens eine der Gruppen R6 bis R8 eine der Gruppen -OH, -NH2, - NH oder-SH ist.

Als Verbindung B lässt sich dabei beispielsweise eine Verbindung oder lassen sich mehrere Verbindungen aus der folgenden Liste vorteilhaft einsetzen: 2-Dimethylaminethanol, 1-Methyl-2-Dimethylaminoethanol, 1-Phenoxymethyl-2-dimethylaminoethanol, 2-Diethylaminoethanol, 1-Butoxymethyl-2-Dimethylaminoethanol, 1-(2-Hydroxy-3-Phenoxypropyl)-2-Methylimidazol, 1-(2-Hydroxy-3-Phenoxypropyl)-2-Ethyl-4-Methylimidazol, 1-(2-Hydroxy-3-Butoxypropyl)-2-Methylimidazol, 1-(2-Hydroxy-3-Butoxypropyl)-2-Ethyl-4-Methylimidazol, 1-(2-Hydroxy-3-Phenoxypropyl)-2-Phenylimidazolin, 1-(2-Hydroxy-3-Butoxypropyl)-2-Methylimidazolin, 2-(Dimethylaminomethyl)phenol, 2,4,6-Tris(dimethylaminomethyl)phenol, N-β-Hydroxyethylmorpholin, 2-Dimethylaminoethylamin, 3-Dimethylamino-n-Propylamin, 2-Diethylaminoethylamin, 3-Diethylamino-n-Propylamin, N-Methylpiperazin, Imidazol, 2-Methylimidazol, 2-Ethylimidazol, 2-Ethyl-4-Methylimidazol, 2-lsopropylimidazol, 2-Undecylimidazol, 2-Octadecylimidazol, 2-Phenylimidazol, 2-Phenyl-4-Methylimidazol, 2-Dimethylaminoethanethiol, Methimazol, 2-Mercaptobenzoimidazol, 2-Mercaptobenzothiazol.

In vorteilhafter Weise wird das Carbonsäureanhydrid C gewählt aus der Liste, die aus Bernsteinsäureanhydrid, Phthalsäureanhydrid, Tetrahydrophthalsäureanhydrid, Methyltetrahydrophthalsäureanhydrid, Hexahydrophthalsäureanhydrid, Methylhexahydrophthalsäureanhydrid, Methylnadinsäureanhydrid, Dodecenylbernsteinsäureanhydrid, Pyromellitsäuredianhydrid oder 5- (2, 5-Diketo-tetrahydrofuryl)-3-methyl-3-cyclohexen-1,2-dicarbonsäureanhydrid gebildet ist.

Weitere Komponenten und Additive

Die Klebemasse des erfindungsgemäßen Klebebandes kann darüber hinaus auch einen Beschleuniger enthalten. Dieser bewirkt insbesondere, dass die Starttemperatur für die Vernetzungsreaktion des Reaktivharzes verringert wird. Damit wird die Handhabung bei der Verklebung verbessert. Dabei ist zu beachten, dass die durch die Zugabe eines Beschleunigers gesenkte Starttemperatur als Nachteil mit einer verringerten Lagerstabilität einhergeht, da die Senkung der Starttemperatur auch eine ungewünschte erhöhte Reaktion während der Lagerung bewirkt. Trotzdem sind die erfindungsgemäßen Klebebänder in ihrer Lagerstabilität den mit Epoxidklebstoffen getränkten Prepregs des Standes der Technik weit überlegen.

Will man den genannten Effekt jedoch vermeiden, kann auf Beschleuniger auch ganz verzichtet werden.

Als Beschleuniger können insbesondere modifizierte und unmodifizierte Imidazole (z.B. von Evonik oder Shikoku), Harnstoffderivate, Säureanhydride, tertiäre Amine, Polyamine und deren Kombination zum Einsatz kommen wie sie beispielsweise von Alzchem (Dyhard-Serie), Huntsman (Aradur-Serie) von Threebond oder sogenannte Epoxy-amin-Addukte wie sie von Airproducts, Shikoku oder Ajinomoto vertrieben werden.

Optional kann die Klebemasse weitere Additive, Rheologiemodifizierer, Schäumungsmittel, Füllstoffe, Farbstoffe, Alterungsschutzmittel, Flammschutzmittel, Vernetzer oder Adhäsionsvermittler enthalten; insbesondere zur Einstellung der optischen und klebtechnischen Eigenschaften als weitere Komponenten, insbesondere Festkomponenten. In bestimmten Ausführungsformen sind Füllstoffe und/oder Rheologiemodifizierer enthalten. Überraschend wurde festgestellt, dass diese unterstützend auf das Aufschließen wirken können, wenn die Zugabe bereits in der Füllzone oder der Aufschlusszone erfolgt, diese also beim Aufschluss in der Aufschlusszone anwesend sind. Besonders bewährt hat sich hier beispielsweise die Zugabe pyrogener Kieselsäuren, beispielsweise solche, die unter dem Namen Aerosil kommerziell erhältlich sind, insbesondere Aerosil R202, Talkum oder auch Kreide.

Als Füllstoffe sind beispielhaft zu nennen Farbstoffe und Pigmente, abrasive und verstärkende Füllstoffe, wie z. B. Kreiden ($CaCO_3$)-zum Beispiel Mikrosöhl-Kreide—Titandioxide, Zinkoxide und Ruße, weiterhin schwerentflammbare Füllstoffe - wie beispielsweise Ammoniumpolyphosphat -, elektrisch leitfähige Füllstoffe - wie beispielsweise Leitruß, Kohlenstofffasern und/oder silberbeschichtete Kugeln -, weiterhin thermisch leitfähige Materialien - wie beispielsweise Bornitrid, Aluminiumoxid, Siliciumcarbid -, weiterhin ferromagnetische Additive - wie beispielsweise Eisen-(III)-oxide) -, weiterhin Additive zur Volumenerhöhung, insbesondere zur Herstellung geschäumter Schichten - wie beispielsweise Blähmittel, Glasvollkugeln, Glashohlkugeln, Mikrokugeln aus anderen Materialien, expandierbare Microballons, Kieselsäure, Silikate, organisch nachwachsende Rohstoffe, beispielsweise Holzmehl, organische und/oder anorganische Nanopartikel, Fasern -, weiterhin Alterungsschutzmitteln, Lichtschutzmitteln, Ozonschutzmitteln, Compoundierungsmittel, Plastifizierungsmittel, primäre Antioxidantien, sekundäre Antioxidantien, Prozessstabilisatoren - wie zum Beispiel C-Radikalfänger —,Verarbeitungshilfsmittel, Blähmittel oder dergleichen.

Füllstoffe werden beispielsweise zur Steigerung der Kohäsion einer Haftklebemasse eingesetzt. Füllstoffe können auch den Aufschluss der eingesetzten Polymere verbessern. Füllstoffe werden auch zur Gewichts- beziehungsweise Volumenerhöhung beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe wie Calciumcarbonat, Kaolin, Dolomit und dergleichen werden mechanisch hergestellt. Auch bei nicht-thermoplastischen Elastomeren beziehungsweise Kautschuk kann man durch geeignete Füllstoffe die Qualität verbessern, so beispielsweise Härte, Festigkeit, Elastizität und Dehnung. Viel gebrauchte Füllstoffe sind Carbonate, insbesondere Calciumcarbonat, aber auch Silicate (Talk, Ton, Glimmer), Kieselerde, Calciumund Bariumsulfat, Aluminiumhydroxid, Glasfasern und -kugeln sowie Ruße. Man kann anorganische und organische Füllstoffe auch nach ihrer Dichte unterscheiden. So erhöhen die oft in Klebemassen verwendeten anorganischen Füllstoffe wie Kreide, Titandioxid, Calciumund Bariumsulfat die Dichte des Composites.

Insbesondere gibt es Füllstoffe, die die Gesamtdichte des Composites reduzieren können. Hierzu zählen Mikrohohlkugeln, sehr voluminöse Leichtfüllstoffe. Die Kugeln sind beispielsweise mit Luft, Stickstoff oder Kohlendioxid gefüllt, die Kugelschalen bestehen häufig aus Glas.

Bei den als Festkomponente eingesetzten Mikrohohlkugeln kann es sich alternativ auch um Mikroballons handeln. Unter "Mikroballons" werden erfindungsgemäß elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 μm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel@ DU-Typen (DU = dry unexpanded) von der Firma Akzo Nobel.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%.

Erfindungsgemäß können auch sogenannte vorexpandierte Mikroballons eingesetzt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel von der Firma Akzo Nobel kommerziell erhältlich.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Bei den Alterungsschutzmitteln handelt es sich insbesondere um Antiozonantien, primäre Antioxidantien wie zum Beispiel sterisch gehinderte Phenole, sekundäre Antioxidantien wie zum Beispiel Phosphite oder Thioether, oder um Lichtschutzmittel wie zum Beispiel UV-Absorber oder sterisch gehinderte Amine.

Im erfindungsgemäßen Verfahren können den - insbesondere festen - nicht-thermoplastischen Elastomeren, wie insbesondere den Nitrilkautschuken - zur Verbesserung der Verarbeitbarkeit thermoplastische Elastomere wie beispielsweise Synthesekautschuke mit einem Anteil von bis zu 5 Gew.-% zugesetzt werden, bezogen auf das Gesamtgewicht der letztlich herzustellenden Haftklebemasse. Stellvertretend genannt seien an dieser Stelle vor allem die besonders verträglichen Styrol-Isopren-Styrol(SIS)- und Styrol-Butadien-Styrol(SBS)- Typen.

Außerdem können den - insbesondere festen - nicht-thermoplastischen Elastomeren, wie insbesondere den Nitrilkautschuken. - inerte Trennhilfsmittel wie Talkum, Silicate (Talk, Ton, Glimmer), Zinkstearat und PVC-Puder zugesetzt werden, und zwar insbesondere in einer Größenordnung von 3 Gew. %.

Füllstoffe können insbesondere als Feststoff - insbesondere pulver- oder granulatförmig - eingesetzt werden. Sie sollten derart gewählt werden, dass sie mit der Klebmasse kompatibel sind.

Als Rheologiemodifizierungsmittel lassen sich grundsätzlich alle geeigneten Rheologiemodifizierungsmittel, wie sie im Stand der Technik beschrieben sind, einsetzen. Auf Kompatibilität mit dem Klebstoff sollte dabei geachtet werden. Die einsetzbaren Rheologiemodifizierungsmittel können organischer oder anorganischer Natur sein und flüssig oder insbesondere fest vorliegen. Als Rheologiemodifizierungsmittel eignen sich erfindungsgemäß insbesondere Polyamidwachse, Tonmineralien, Schichtsilikate, pyrogene Kieselsäuren, präzipitierte Kieselsäure und/oder synthetischen

Rheologieadditiven, wie Rizinusölderivate, modifizierte Rizinusölderivate, Polyolefine sowie Hybride aus den vorgenannten.

Einsetzbar sind auch Polymere als Rheologiemodifizierungsmittel, wie beispielweise Polymere olefinischer Natur - wie beispielsweise Polymere auf Basis von Ethylen, Butylen, Propylen oder einem höheren Kohlenwasserstoff-, styrolbasierte Polymere-wie beispielsweise Styrol-Butydien-Polymere. Grundsätzlich einsetzbar sind auch Polymere auf Basis von Acrylsäure, Methacrylsäure oder anderen ungesättigten Carboxylsäuren oder auf Basis der Ester der vorgenannten Säuren —wie beispielsweise Acrylate, Methycrylate, Mischungen von Acrylaten und Methacrylaten -, Polymere auf Basis von Acetaten —wie beispielweise Ethylenvinylacetat. Werden mehrere Rheologiemodifizierungsmittel eingesetzt, können diese grundsätzlich unabhängig voneinander aus den vorgenannten Gruppen von Verbindungen und/oder weiteren Verbindungsklassen ausgewählt werden.

Detaillierte Beschreibung des erfindungsgemäßen Verfahrens

Der Aufschluss der nicht-thermoplastischen Elastomere, einschließlich des oder der Nitrilkautschuke, erfolgt erfindungsgemäß in einem Mehrwellenextruder mit wenigstens sechs in einem Kreis in einem Extrudergehäuse angeordneten achsparallelen, gleichsinnig drehenden Schneckenwellen bezeichnet. Mehrwellenextruder als kontinuierlich arbeitendes Aggregat sind seit einiger Zeit bekannt, so etwa aus der eingangs genannten DE 10 2015 120 583 A, jedoch nicht für Reaktiv-Klebstoffe.

Erfindungsgemäß geeignete Mehrwellenextruder bestehen aus wenigstens sechs kreisförmig in einem Extrudergehäuse angeordneten achsparallelen, gleichsinnig drehenden Schneckenwellen. Ein Querschnitt einer solchen Anordnung zeigt beispielhaft - am Beispiel eines zwölf Schneckenwellen aufweisenden Mehrwellenextruders - in einer schematischen Schnittzeichnung die Fig. 1 der Schrift DE 10 2015 120 583 A. Mehrwellenextruder mit zwölf kreisförmig angeordneten achsparallelen, gleichsinnig drehenden Schneckenwellen sind zum Einsatz für die vorliegende Erfindung vorteilhaft geeignet.

Der Verfahrensraum wird gebildet durch hintereinander angeordnete Gehäuseelemente, die einzeln und unabhängig voneinander gekühlt beziehungsweise temperiert werden können, sowie einen durchgängig verlaufenden Gehäusekern, der ebenfalls gekühlt beziehungsweise temperiert werden kann.

Die Extruderschnecken der einzelnen Gehäuseelemente können individuell für die einzelnen Prozessaufgaben zusammengesetzt werden. Dazu werden die unterschiedlichen Schneckenelemente -je nach Eignung zum Fördern, Kneten, Mixen, Dispergieren - auf einen Schneckendorn gesteckt. Diese Technologie ist dem Fachmann geläufig.

Dabei besteht die Möglichkeit, Schneckenelemente mit T- bzw. Z-Profil zu verwenden, die einen Schmelzefilm auf den Zylinder- und/oder Schneckenoberflächen streichen, wobei dieser nach einer halben Schneckenumdrehung wieder abgestreift wird. Dadurch wird die Temperierung und Entgasung der Masse verbessert.

Des Weiteren findet durch eine Vielzahl von Schneckenelementen eine Durchmischung des inneren und äußeren Stoffstromes statt. Zusätzlich sind die Schnecken bevorzugt selbstreinigend ausgelegt, insbesondere derart, dass jede Schneckenoberfläche durch eine benachbarte Schnecke abgestreift und damit gereinigt wird.

Durch die Anordnung der Schneckenelemente werden beispielsweise Zugabezonen, Förderzonen, Compoundierzonen und Vakuumzonen gebildet. Die einzelnen Zonen können durch Rückförderelemente voneinander getrennt werden, die den Materialstrom aufstauen. Rückförderelemente können auch innerhalb einer Zone vorgesehen sein. Die einzelnen Zonen können sich dabei ohne weiteres über mehrere Gehäuseelemente erstrecken, also eine Abfolge von unterschiedlichen Schneckenelementen aufweisen. Als Gehäuseelement wird der kleinste Teilbereich angesehen, dessen Temperatur unabhängig der anderen Elemente angesteuert werden kann.

Die Einfüllzone ist ein offenes Gehäuseelement, in dem die Schnecken mit Förderelementen versehen sind. Feststoffkomponenten werden dosiert über einen Trichter in den Einzugsbereich beziehungsweise die Einfüllzone oder über Sidefeeder dem Verfahrensraum zugeführt.

Die Zugabe von Flüssigkomponenten erfolgt über Gehäusebohrungen und/oder über Einspritzbohrungen in den Verschlussstopfen für Sidefeeder- bzw. Stufferöffnungen.

Erfindungsgemäß können hervorragend Mehrwellenextruder eingesetzt werden, wie sie in den Schriften DE 10 2014 010 036 A, 10 2015 120 583 A, DE 10 2015 120 585 A und DE 10 2015 120 586 A beschrieben und in den dortigen Figuren gezeigt sind. Die dort dargestellten Sachverhalte werden durch Referenz in die vorliegende Offenbarung aufgenommen.

Bevorzugt wird das zumindest eine nicht-thermoplastische Elastomer in einem Mehrwellenextruder aufgeschlossen, der mehrere Gehäusezonen - und dabei insbesondere mehrere Compoundierzonen - aufweist. Dabei werden die nicht-thermoplastischen Elastomere kontinuierlich - insbesondere über die Füllzone - in die Aufschlusszone und durch diese hindurch gefördert. Der zum Aufschluss der nicht-thermoplastischen Elastomere verwendete Teil der Epoxidharze wird ebenfalls kontinuierlich in die Aufschlusszone, insbesondere die erste der Compoundierzonen, eingebracht, wobei die Menge an Harz so gewählt ist, dass dieses ausreichend vorhanden ist, um einen homogenen Aufschluss zu ermöglichen, und nicht mehr Harz als notwendig gewählt wird, um diesen homogenen Aufschluss nicht zu verhindern.

Wird zuviel Harz gewählt, so wird die Scherleistung stark erniedrigt und das nicht-thermoplastische Elastomer "schwimmt", ohne aufgeschlossen zu werden, durch den Extruder.

Die Aufschlusszone ergibt sich aus der Schneckenkonfiguration und der Viskosität des Epoxidharzes und kann experimentell leicht bestimmt werden. Dies erfolgt, indem zunächst das nicht-thermoplastische Elastomer möglichst weit "upstream" - also zu Beginn - des Extruders mit einem Teil des Epoxidharzes eingespeist wird. Die Menge an Epoxidharz, welches unmittelbar mit dem Elastomer eingespeist wird, wird solange erhöht, bis der Aufschlusstest des Compounds nicht mehr bestanden wird. Eine kleine Reduzierung des Massestroms des Epoxidharzes führt dann wieder zu einem homogen aufgeschlossenen Polymer-Epoxidharz-Compound. Somit ist die maximale Epoxidharzmenge für die gewählte Schneckenkonfiguration / Reaktivharz Kombination gefunden. Die weiteren Epoxidharze und Klebstoffbestandteile werden dann schrittweise "downstream" zugeschaltet.

Der Anfang der ersten der Aufschlusszone nachfolgenden Compoundierzone ergibt sich nun aus dem Dosierpunkt, an dem weitere Harze zugegeben werden können, ohne das homogene Aufschlussbild negativ zu beeinflussen.

Das erfindungsgemäße Verfahren kann insbesondere folgende Prozessschritte aufweisen:

- das zumindest eine nicht-thermoplastische Elastomer wird in einer Füllzone des Mehrwellenextruders vorgelegt und von dort kontinuierlich mit einem mittleren Massestrom $q_{El}$ in die Aufschlusszone transportiert,
- ein Teil der Epoxidharze wird kontinuierlich mit einem mittleren Massestrom $q_{RH1}$ über die Füllzone und/oder in einer ersten Einlassvorrichtung in die Aufschlusszone zugegeben ("erster Reaktivharzzufluss"), so dass das Verhältnis V der Masse an Epoxidharzen $M_{Epoxid}$ zur Masse an nicht-thermoplastischen Elastomeren $M_{Elast}$ den Wert $V = M_{Epoxid}/ M_{Eiast}= 2$ zu keiner Zeit überschreitet; mit anderen Worten, dass also die Massenanteil an Epoxidharzen $M_{Epoxid}$ in der Aufschlusszone jederzeit maximal 66,66 Gew.-% der Gesamtmasse $M_G$ an Epoxidharzen und nicht-thermoplastischen Elastomern ($M_G = M_{Epoxid} + M_{Elast}$) beträgt;

das zumindest eine nicht-thermoplastische Elastomer und das Reaktivharz des ersten Reaktivharzzuflusses werden in der Aufschlusszone kontinuierlich innig miteinander vermengt.

Wird die Menge an Epoxidharzen derart gewählt, dass sie die Menge an nicht-thermoplastischen Elastomeren $M_{Elast}$ um das Doppelte überschreitet, kann es dazu kommen, dass gar kein Aufschluss des Nitrilkautschuks stattfindet, so dass keine homogene Vermischung der Komponenten eintritt.

"Jederzeit" - beziehungsweise entsprechend "zu keiner Zeit" - bezieht sich hier und bei der Prozessbeschreibung im Rahmen dieser Schrift auf den kontinuierlich laufenden Prozess, so dass gegebenenfalls auftretende Abweichungen während der üblichen Anlauf- und Abschlussphasen des Prozesses den gemachten Angaben nicht entgegenstehen.

Der Beschreibung dieses Prozessschrittes als "kontinuierlich Förderung" durch die Aufschlusszone soll es nicht entgegenstehen, dass die Compoundiermasse am Ende dieser Zone aufgestaut wird - etwa durch eine entsprechende Verdichtungszone -, solange Zulauf in und Ablauf aus dieser Aufschlusszone sich im Wesentlichen die Waage halten. Der Beschreibung als "kontinuierlich" sollen ebenfalls nicht die üblichen Anlauf- und Abschlussphasen des Prozesses entgegenstehen.

Als "Aufschlusszone" wird diejenige Compoundierzone oder derjenige mehrere Compoundierzonen umfassende Extruderbereich bezeichnet, in der die nicht-thermoplastischen Elastomere und der der zum Aufschluss der nicht-thermoplastischen Elastomere verwendete Teil der Epoxidharze zusammengeführt werden. Dies wird regelmäßig auch die zuvorderst im Mehrwellenextruder angeordnete Compoundierzone umfassen. Der Bezeichnung "Aufschlusszone" steht es jedoch nicht entgegen, wenn vor dieser Zone weitere Compoundierzonen angeordnet sind, die leer bleiben oder die nur eine der Komponenten ohne weitere Vermischung durchgeführt werden.

Der Mehrwellenextruder kann im Verlauf seiner Länge mit radialen Bohrungen oder sonstigen Eingabevorrichtungen für Materialien versehen sein, über die Flüssigkeiten wie zum Beispiel Weichmacheröle oder auch Schutzgase wie Stickstoff, Argon, Kohlendioxid o.ä. dem Mehrwellenextruder zugeführt werden können. Insbesondere können über die Eingabevorrichtungen flüssige Komponenten wie zum Beispiel flüssige Epoxidharze oder Harzschmelzen zugegeben werden. Über die Menge an Flüssigkeit, die bereits vor Einfluss an Scherenergie zugegeben wird, lassen sich sowohl Abbaugrad der Elastomere wie auch Compoundierungstemperatur der druckempfindlichen Klebemasse beeinflussen. Beispielsweise wird ein besonders geringer Molmassenabbau der Elastomeren erhalten, wenn ein flüssiger Weichmacher bereits dann zugegeben wird, wenn noch keinerlei Einfluss von Friktionsenergie erfolgte, also dieser entweder einem Feststoffpremix zugegeben wird, oder das Weichmacheröl zwischen Füllschnecke und erster Compoundierzone (als Teil der Aufschlusszone oder diese bildend) kontinuierlich zudosiert wird. Auch ein Aufteilen der Komponenten als sogenannter split-feed über die Verfahrenslänge ist möglich und ist ein weiterer Parameter zur Steuerung des Prozesses hinsichtlich Elastomerabbau und Produkttemperatur.

Die dargelegten Verfahrensschritte können optional unter einer Schutzgasatmosphäre zur Vermeidung von oxidativem Polymerabbau durchgeführt werden.

Im Unterschied zu sonst üblichen Herstellungsverfahren wird davon ausgegangen, dass im Mehrwellenextruder gemäß dem Verfahren der vorliegenden Erfindung allenfalls eine geringfügige Mastikation der nicht-thermoplastischen

Elastomere, insbesondere des Nitrilkautschuks stattfindet, da dieser hier nicht separat dem Einfluss hoher Scherenergie unterworfen wird, sondern zusammen mit einer oder mehreren flüssigen Komponenten verarbeitet wird. Das Ausmaß an Friktionsenergie konnte derartig limitiert werden, dass die Mastikation des Kautschuks, d. h. der Molmassenabbau der Elastomeren, gering gehalten sowie hohe resultierende Compoundierungstemperaturen vermieden werden können.

Über die Temperiervorrichtung lässt sich insbesondere der Eintrag an Prozesswärme steuern. Hierdurch lassen sich Haftklebemassen herstellen, die typischerweise besonders homogen sind und gleichzeitig allenfalls einer geringfügigen Mastikation unterliegen.

Charakteristisch für den Mehrwellenextruder ist, dass die Temperaturkontrolle der verarbeiteten Masse sehr gut über die eingestellten Gehäuse- beziehungsweise Kerntemperaturen gelingt, und regelmäßig besser als beispielsweise mit einem Doppelschneckenextruder. Bei einem Mehrwellenextruder kann deshalb oft auch bei einem Scale-Up-Schritt mit ähnlichen Temperaturen gearbeitet werden, selbst wenn die Drehzahl deutlich geändert wird.

Je nach Prozessführung können mit dem Massestrom aus der Füllzone oder über die erste oder gegebenfalls andere Einlassvorrichtungen weitere Zusatzstoffe in die Aufschlusszone eingegeben werden.

Die Compoundiermasse wird aus der Aufschlusszone kontinuierlich in die erste der Aufschlusszone nachfolgenden Compoundierzonen weitergeführt.

Der zumindest eine Härter wird vorteilhaft in einer oder mehreren der Aufschlusszone nachfolgenden Gehäusezonen, insbesondere nachfolgenden Compoundierzonen, zugegeben. Die Zugabe erfolgt dabei vorteilhaft möglichst spät im Herstellungsprozess, um eine vorzeitige Härtungsreaktion auszuschließen und das zur Verfügung stehende Temperaturfenster bei der Compoundierung möglichst flexibel nutzen zu können.

Bevorzugt erfolgt die Zugabe des Härters bei einer Temperatur der Compoundiermasse unterhalb der Aktivierungstemperatur des Reaktivsystems, bevorzugt bei einer Temperatur der Compoundiermasse, die mindestens 10 °C unter der Aktivierungsenergie des Reaktivsystems liegt. Die Aktivierungstemperatur ist erfindungsgemäß definiert als die Onsettemperatur $T_{RO}$ des DDK-Diagramms nach DSC gemäß DIN 53765:1994.

In einer oder mehreren der Aufschlusszone nachfolgenden Gehäusezonen können außerdem ein oder mehrere Beschleuniger für das Reaktivsystem zugegeben werden. Diese Zugabe erfolgt in einer vorteilhaften Vorgehensweise gemeinsam mit der Zugabe des oder der Härter.

In einer bevorzugten Ausführungsform des erfindungsgemäßen Verfahrens ist zwischen Mehrwellenextruder und der eingesetzten Beschichtungsvorrichtung eine Schmelzepumpe oder ein Extruder zur Klebmasseförderung, insbesondere ein Entgasungsextruder wie beispielweise ein Doppelschneckenextruder, angeordnet, der drehzahl- oder druckgeregelt, vorzugsweise druckgeregelt betrieben wird. Um beim Beschichten einen definierten, vollflächigen Masseauftrag auf dem bahnförmigen Material, d.h. bahnförmigen Träger, zu erhalten, ist es vorteilhaft, wenn die Haftklebemasse vor Eintritt in eine Beschichtungsdüse und/oder einen Kalander einer Entgasung unterworfen wird, was besonders wichtig ist im Falle der Verwendung von Schutzgasen während des Compoundierprozesses im Mehrwellenextruder. Gemäß dem Verfahren der vorliegenden Erfindung erfolgt die Entgasung unter Einfluss von Vakuum vorzugsweise in Schneckenmaschinen, die zugleich die Druckverluste der Rohrleitungen und Beschichtungsdüse überwinden können.

Insbesondere bevorzugt ist diese Entgasung über eine Schneckenmaschine Bestandteil des Mehrwellenextruders und befindet sich vorteilhaft - insbesondere auf die Compoundierzonen folgend - am Ende des Mehrwellenextruders. Dies zeichnet die besondere Effektivität eines Mehrwellenextruders im Vergleich z.B. zu einem Planetwalzenextruder aus, da sowohl Compoundierung, als auch Entgasung in einem Prozessablauf in einem Aggregat erfolgen kann. Die Qualität der Entgasung ist dabei sehr hoch.

Für die Herstellung solcher Klebemassen, bei denen der Massenanteil der Elastomere an der Gesamtmasse von Reaktivharzen, insbesondere Epoxidharzen, plus Elastomeren (Gesamtmasse als 100 %, also ohne Berücksichtigung eventueller weiterer Komponenten, wie Füllstoffe und dergleichen) in der resultieren haftklebrigen Klebemasse mindestens 20 Gew.-% beträgt, kann man erfindungsgemäß vorteilhaft derart vorgehen, dass der zum Aufschluss verwendete Teil der Reaktivharze in der Aufschlusszone ausschließlich Epoxidharze mit einer Erweichungstemperatur von mindestens 40 °C und/oder Epoxidharze mit einer Viskosität von mehr als 50 Pa·s bei Raumtemperatur umfasst.

Für die Herstellung solcher Klebmassen, bei denen der Masse-Anteil der Elastomere an der Gesamtmasse von Reaktivharzen - insbesondere Epoxidharzen - und Elastomeren (Gesamtmasse als 100 %, also ohne Berücksichtigung eventueller weiterer Komponenten, wie Füllstoffe und dergleichen) in der resultieren haftklebrigen Klebemasse weniger als 20 Gew.% beträgt, ist es in der Regel erforderlich, aufgrund der hohen Harzmenge in der resultierenden Klebmasse, aber der erfindungsgemäß begrenzt möglichen Harzmenge in der Aufschlusszone während der weiteren Prozessschritte noch weitere Mengen an Reaktivharz zuzugeben. Soll dies im Mehrwellenextruder geschehen, so ist die Füllmenge der Aufschlusszone zunächst insgesamt gering, was einem erfolgreichen Aufschluss entgegenstehen kann. Dem kann dadurch entgegengewirkt werden, dass die weiteren Reaktivharzmengen oder zumindest ein wesentlicher Teil davon erst in einem zweiten Aggregat zugegeben werden, das unabhängig betrieben werden kann.

Man kann vorteilhaft auch so vorgehen, dass der zum Aufschluss verwendete Teil der Reaktivharze in der Aufschlusszone ausschließlich Epoxidharze mit einer Erweichungstemperatur von mindestens 40 °C und/oder Epoxidharze mit einer Viskosität von mehr als 50 Pa·s bei Raumtemperatur umfasst, wobei der Massenanteil an Epoxidharzen

an der Gesamtmasse von Epoxidharzen und nicht-thermoplastischen Elastomeren in der Aufschlusszone nicht über 50 % liegt, insbesondere im Bereich von 25 bis 50 % liegt, und wobei in der Aufschlusszone weiterhin mindestens 10 Gew.-% Füllstoffe in die Compoundiermasse eingebracht werden, bezogen auf die dann vorliegende gesamte Compoundiermasse in der Aufschlusszone.

Das erfindungsgemäße Verfahren ist insbesondere auch zur Herstellung solcher Klebmassen geeignet, bei denen als Matrixpolymerkomponente ein Nitrilkautschuk oder eine Mischung mehrerer Nitrilkautschuke, oder Elastomere umfassend einen oder mehrere Nitrilkautschuke verwendet werden, sowie als Reaktivsystem einerseits ein Epoxidharz oder eine Mischung mehrerer Epoxidharze, oder Reaktivharze umfassend ein oder mehrere Epoxidharze sowie andererseits mindestens einen Initiator für eine Epoxidharzhärtung oder Härter für Epoxidharze eingesetzt werden, und bei denen das Verhältnis von Reaktivharzen zu Elastomeren in der Klebemasse mindestens 1 : 1 beträgt, also für solche Klebmassen, die einen hohen Reaktivharzanteil aufweisen. Eine solche Klebmasse, enthaltend mindestens ein Polymer, das bevorzugt Nitrilkautschuk ist, weiterhin enthaltend mindestens ein Reaktivharz, wobei die Klebemasse auf 100 Teile Polymer und Klebharz mindestens 104 Teile des mindestens einen Reaktivharzes enthält, sowie mindestens einen Initiator und/oder Härter beschreibt beispielsweise die eingangs genannte DE 10 2015 217 860 A. Wie bereits angedeutet, bietet sich das erfindungsgemäße Verfahren insbesondere dann an, wenn auf die Anwesenheit von Klebharzen verzichtet werden soll.

Mit den erfindungsgemäß hergestellten Klebemassen werden - wie bereits dargestellt - bevorzugt Klebebänder hergestellt, wobei sich auch Klebebänder mit dicken Klebebandschichten realisieren lassen. Dazu wird die Klebemasse auf ein bahnförmiges Material aufgetragen (permanentes oder ein temporär verwendetes Trägermaterial; siehe oben).

Vorteilhaft wird die resultierende haftklebrige Klebemasse nach der Zugabe des Härters unterhalb der Aktivierungstemperatur des Reaktivsystems zu einer Klebemassenschicht ausgeformt, insbesondere auf das bahnförmige Material aufgetragen, bevorzugt bei einer Temperatur der Klebmasse, die mindestens 10 °C unter der Aktivierungsenergie des Reaktivsystems liegt.

Die Beschichtung des bahnförmigen Materials erfolgt bevorzugt lösemittelfrei, beispielsweise mittels Düsenbeschichtung oder mit einem Mehrwalzenauftragswerk. Besonders effektiv und vorteilhaft kann dies mit einem 2- bis 5-Walzenauftragswerk erfolgen. Besonders effektiv kann dies mit einem 4-Walzenauftragswerk erfolgen, so dass die Selbstklebemasse bei Durchgang durch ein oder mehrere Walzenspalte vor Übergabe auf das bahnförmige Material auf die gewünschte Dicke ausgeformt wird. Die Walzen des Auftragswerkes können dabei einzeln auf Temperaturen von 20 °C bis 150 °C eingestellt werden.

Die Aushärtung der erfindungsgemäßen Klebstoffe beziehungsweise Klebebänder nach Applikation kann vorteilhaft bei Temperaturen zwischen 120 °C und 200 °C für 10 bis 120 Minuten erfolgen. Die exakten Bedingungen richten sich nach dem verwendeten Härter und dem gegebenenfalls verwendeten Beschleuniger und der verwendeten Menge an Beschleuniger. Typischerweise werden Beschleuniger zwischen 0.5 phr und 5 phr eingesetzt, wobei phr sich auf die Menge an verwendeten Epoxidharzen bezieht. Beispielhafte Aushärtebedingungen sind 30 Minuten bei 180 °C, 30 Minuten bei 160 °C, 35 Minuten bei 145 °C, 60 Minuten bei 130 °C, 120 Minuten bei 120 °C.

Das beschriebene Verfahren erlaubt die Herstellung von hochleistungsfähigen haftklebrigen Reaktivklebemassen und insbesondere im Verbund mit einer nachgeschalteten Beschichtungseinheit die Herstellung von hochleistungsfähigen Klebebändern unter Erlangung besonderer Kostenvorteile.

Das erfindungsgemäße Verfahren bietet weiterhin den Vorteil, sehr gut entgaste Klebemassen anbieten zu können, die ein sehr homogenes Schichtbild ergeben. Vorteilhaft liegt die Anzahl der Gasblasen, größer 1 mm in der längsten Ausdehnung , bezogen auf eine Fläche von 100 $cm^2$, ermittelt im Aufschlusstest, bei weniger 10, bevorzugt bei weniger 5, sehr bevorzugt bei weniger 2, ganz bevorzugt bei keinen Gasblasen. Verfahren mit anderen Extrudern - wie Doppelschneckenextrudern, Planetwalzenextrudern - erreichen diese Qualität nicht oder zumindest nicht bei Verwendung eines einzigen Aggregats, sondern allenfalls durch Nachschaltung eines separaten Entgasungsaggregats.

## Referenzmethoden

Die jeweiligen Parameterangaben im Rahmen dieser Schrift beziehen sich auf die nachfolgenden Referenz-Bestimmungsmethoden, sofern im Einzelnen nichts anderes spezifiziert oder angegeben ist.

### Viskosität

Ein Maß für die Fließfähigkeit fließfähiger Materialien ist die dynamische Viskosität, auf die sich mit dem Begriff "Viskosität", wie im Rahmen dieser Schrift verwendet, bezogen wird. Die dynamische Viskosität wird nach DIN 53019 bestimmt. Die Viskosität wird in einem Zylinderrotationsviskosimeter mit einer Standardgeometrie nach DIN 53019-1 bei einer Messtemperatur von 23 °C und einer Schergeschwindigkeit 1 $s^{-1}$ gemessen.

Molmasse

Angaben zur zahlenmittleren Molmasse $M_n$ beziehungsweise zur gewichtsmittleren Molmasse $M_w$ beziehen sich auf die Messung mittels Gelpermeationschromatographie (GPC) wie folgt: Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm × 50 mm verwendet. Zur Auftrennung wurden die Säulen PSS-SDV, 5 μ, $10^3$ sowie $10^5$ und $10^6$ mit jeweils ID 8,0 mm × 300 mm eingesetzt. Die Probenkonzentration betrug 4 g/l, die Durchflussmenge 1,0 ml pro Minute. Es wurde gegen Polystyrol-Standards gemessen.

Erweichungstemperaturen von Polymeren beziehungsweise Harzen

Die Erweichungstemperatur wird nach der einschlägigen Methodik durchgeführt, die als ‚Ring and Ball' bekannt ist und nach ASTM E28 standardisiert ist.

Zur Bestimmung der Erweichungstemperatur der Harze kommt ein Ring-Kugel-Automat HRB 754 der Firma Herzog zum Einsatz. Harzmuster werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das Harz nach dem Schmelzen den Zylinder ohne Überstand voll ausfüllt. Der resultierende Probekörper wird samt Zylinder in die Probehalterung des HRB 754 eingelegt. Zur Befüllung des Temperierbads wird Glycerin verwendet, sofern die Klebharzerweichungstemperatur zwischen 50 °C und 150 °C liegt. Bei niedrigeren Klebharzerweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Erweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Erweichungstemperatur ist der Mittelwert aus den beiden Einzelmessungen.

Aufschlusstest:

5 g der Haftklebemasse werden zwischen zwei Prozesslinern mithilfe einer Heißpresse bei 110 °C und 5 bar Druck verpresst. Als Prozessliner werden dabei beidseitig mit unterschiedlich abgestuften Silikonsystemen beschichtete PET-Folien einer Dicke von 75 μm eingesetzt. Nach dem Abkühlen wird der Pressling auseinandergezogen, so dass sich eine Dicke der sich ergebenden Haftklebemasseschicht von etwa 50 μm ergibt. Die Schicht wird vor eine Lampe gehalten.

Anderweitig hergestellte erfindungsgemäße (einschichtige) Klebmasseschichten können entsprechend geprüft werden, indem sie ebenfalls derart biaxial gestreckt werden, bis die entsprechende Schichtdicke von 50 μm resultiert. Daraufhin wird die optische Prüfung wie vorstehend beschrieben durchgeführt.

Schichten werden als homogen bezeichnet, wenn auf einer gestreckten Fläche von 100 $cm^2$ mit dem Auge weniger als 10, bevorzugt weniger als 5, und insbesondere weniger als 2 unaufgeschlossene Elastomer-Partikel (insbesondere Nitrilkautschuk-Partikel) zu finden sind. Bei der genannten Prüfung sollte ferner kein nicht eingearbeitetes Reaktivharz zu sehen sein.

Nach demselben Test kann die Güte der Entgasung beurteilt werden, indem die Anzahl der Gasblasen ermittelt wird. Gasblasen werden dann gezählt, wenn sie nach biaxialer Streckung der Schicht -wie vorstehend beschrieben - in ihrer größten Ausdehnung einen Millimeter oder mehr betragen.

Weitere Referenzmethoden ergeben sich aus den Testmethoden im Experimentellen Teil.

## Experimenteller Teil

### Testmethoden

A. Klebkraft

Für die nicht ausgehärteten Klebemassen bzw. Klebebänder wurden die Klebkräfte auf Stahl analog ISO 29862 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wurde eine geätzte PET-Folie mit einer Dicke von 36 μm verwendet, wie sie von der Firma Coveme (Italien) erhältlich ist. Die Verklebung des Messtreifens wurde dabei mittels

einer Anrollmaschine mit 4 kg bei einer Temperatur von 23 °C vorgenommen. Die Klebebänder wurden sofort nach der Applikation abgezogen. Der Messwert (in N/cm) ergab sich als Mittelwert aus drei Einzelmessungen.

B. Verklebungsfestigkeit: Zugscherversuch

Als Kenngröße für die Qualität der erzielten Verklebung wurde die Verklebungsfestigkeit eines nach dem erfindungsgemäßen Verfahren hergestellten, ausgehärteten Verbunds für die unterschiedlichen Klebebänder ermittelt. Es wurde die Verklebungsfestigkeit in einem dynamischen Zugscherversuch in Anlehnung an DIN-EN 1465 bei 23 °C und 50 % rF für eine Prüfgeschwindigkeit von 10 mm/min jeweils quantitativ bestimmt (Ergebnisse in $N/mm^2$=MPa). Als Prüfstäbe kamen solche aus Stahl zum Einsatz, welche vor der Verklebung mit Aceton gereinigt wurden. Die Schichtdicken der Klebebänder entsprachen jeweils 100 µm ± 10 µm. Angegeben ist der Mittelwert aus drei Messungen. Gemessen wurden Verklebungen mit ausgehärteten Klebstoffen. Die Aushärtung erfolgte bei 180 °C ± 2 °C für 30 Minuten.

C. Lagerfähigkeit

Die Lagerfähigkeit (Lf) der (nicht ausgehärteten) Klebebänder wurde über DSC bestimmt. Dazu wird die Reaktionswärme von Mustern, die 10d bei 40°C ($\Delta H_{10d40}$) gelagert wurden, bestimmt und in Vergleich zur Reaktionswärme einem frisch hergestellten Musters ($\Delta H_{frisch}$) gesetzt.

$$Lf_{40} = \Delta H_{10d40} / \Delta H_{frisch}$$

Die Lagerfähigkeit entspricht somit der prozentualen Restreaktivität der reaktiven Klebebänder.

D. Löslichkeitstest

Ob es zu einer Vorreaktion (und somit zu einer Vorvernetzung bzw. Teilvernetzung) zwischen dem nichtthermoplastischen Elastomer und den Reaktivharzen kommt, wurde über einen Löslichkeitstest bestimmt.

Es wurden 2g der zu bewertenden Klebmasse direkt am Ausgang des PWE entnommen und in einem Glas in 20 mL Butanon bei Raumtemperatur für 24h gerührt. Keine Vorvernetzung liegt vor, wenn eine klare Lösung ohne Schlieren entsteht. Sind leichte Schlieren bzw. aufgequollene vernetzte Klebmasseteile sichtbar, so liegt eine Vorvernetzung vor.

E. Thermoplastizität

Die Bestimmung der Thermoplastizität beziehungsweise Nicht-Thermoplastizität erfolgte auf einer Laborheizplatte der Firma Ikamag. Auf die Heizplatte wurde eine quadratische Stahlplatte entsprechend der Spezifizierung gemäß ISO 29862:2007, Abschnitt 5.3.3, aber mit eine Kantenlänge, dass die Heizplatte komplett abgedeckt war, und einer Dicke von 1,1 mm gelegt. Die Temperatur der der Heizplatte abgewandten Oberfläche der Stahlplatte wird mit einem Temperaturfühler gemessen.

Das zu testende Polymer (ein Würfel von ca. 2 cm × 2 cm × 2 cm Höhe, Breite, Tiefe) oder im Falle von Granulaten ein Granulatkügelchen wurde mittig auf die freie Oberfläche der Stahlplatte gelegt.

Es wurden drei Testreihen mit jeweils identischen Mustern des zu testenden Polymers gefahren, bei denen die Stahlplatte bei einer Testreihe auf eine Temperatur von 150 °C, bei der zweiten Testreihe auf eine Temperatur von 200 °C und bei der dritten Testreihe auf eine Temperatur von 250 °C erhitzt wurde (Heizrate jeweils ca. 1 °C pro Sekunde, Bestimmung der Temperatur mittels des Temperaturfühlers). Die Probe wurde für 1 Minute auf der jeweiligen Endtemperatur gehalten und die Stahlplatte dann auf einen Winkel von 60 ° (bezogen auf den planaren, horizontalen Untergrund) geneigt.

Die gemessene Probe gilt als nicht thermoplastisch zumindest bis zu der jeweiligen Temperatur, wenn sie bei der Neigung von selbst von der Platte fällt/rollt.

Für die gemessene Probe gilt, dass sie thermoplastisches Verhalten bereits unterhalb einer jeweiligen Temperatur aufweist, wenn sie bei dem Test zu der jeweiligen Temperatur für mindestens 2 Sekunden an der Platte anhaftet - und somit durch ein zumindest teilweises Aufschmelzen aufgeflossen ist -, wenn sie also innerhalb des Zeitraums von 2 Sekunden also nicht von selbst von der Platte fällt/rollt.

Verwendete Rohstoffe

| | |
|---|---|
| Breon N41H80 | Heißpolymerisierter Nitril-Butadien-Kautschuk mit einem Acrylnitrilanteil von 41 Gew.-% von Zeon Chemicals (London, UK). Mooney Viskosität laut technischem Datenblatt 70 - 95. Nicht-thermoplastisch bis 250 °C nach Testmethode E für Thermoplastizität. |
| Araldite ECN 1273 | Festes Epoxy-Cresol-Novolak der Firma Huntsman mit einer Erweichungstemperatur 68 bis 78 °C und einem eew von 217 - 233 g/eq |
| Epon Resin 828 | Difunktionelles Bisphenol-A / epichlorhydrin Flüssigepoxid mit einem Gewicht pro Epoxid von 185 bis 192 g/eq der Firma Momentive. Viskosität bei 25 °C von 12 bis 14 Pa s. |
| Dyhard 100S | Latenter Härter der Firma AlzChem für Epoxidsysteme bestehend aus mikronisiertem Dicyandiamid bei dem 98 % der Partikel kleiner 10 μm sind. |
| Curezol 2MA-OK | 2,4 Diamino-6-[2'-methylimidazolyl-(1')]-ethyl-s-triazin isocyanursäure Addukt Dihydrat. CAS: 68490-66-4. Hersteller/Anbieter Shikoku. |

Massenzusammensetzung K1

| K1 | |
|---|---|
| **Gew.- Teile** | **Rohstoff** |
| 30 | Breon N41H80 |
| 50 | Araldite ECN1273 |
| 20 | EponResin 828 |
| 4,39 | Dyhard 100S |
| 1,4 | Curezol 2MA-OK |

Extrusionsprozess mit K1:

Bei dem verwendeten Mehrwellenextruder handelte es sich um einen sogenannten Ringextrufer der Fa. Extricom mit 12 im Kreis angeordneten Schnecken. Die Schnecken hatten einen Durchmesser von D = 18mm und einem Verhältnis Außendurchmesser zu Innendurchmesser von: DA/DI = 1,55. Die Gesamtlänge betrug 100D = 1800 mm

Die Schneckenelemente wurden entsprechend der unterschiedlichen Aufgabenstellung angeordnet, um so die Compoundierzonen sowie die Entgasungszone zu bilden.

Das Verfahrensteil bestand aus 16 Gehäuseelementen, in dem die Schnecken um einen kühlbaren Kern angeordnet waren. Die Gehäuseelemente wurden den Erfordernissen entsprechend temperiert.

Schematisch ist der Mehrwellenextruder in Fig. 1 dargestellt, wobei PL für Spitzenplatte steht, in der die 12 Stoffströme der einzelnen Schnecken in einen einzigen Stoffstrom zusammengeführt werden und SP für Schmelzepumpe steht. Die Entgasungszone befand sich in den Gehäuseelementen 11 bis 15. Es wurde das im Folgenden dargestellte Temperaturprofil gewählt und mit einer Drehzahl von 200 U/min extrudiert. Einlaufbereich und Gehäuseelemente 1-5: 70°C, Gehäuseelemente 6-8: 60°C, Gehäuseelemente 9-13: 50°C, Gehäuseelement 14: 40°C, Gehäuseelemente 15-16 und Spitzenplatte: 30°C und die Schmelzepumpe 60°C.

Die dargestellte Anordnung und Ausgestaltung der Extruderkomponenten und Gehäuseelemente sowie die Verfahrensbedingungen betreffen den in den Experimenten konkret verwendeten Sachverhalt. Sie können für das erfinderische Verfahren wunschgemäß angepasst werden, wie dies vorstehend bereits ausgeführt wurde.

Mit der verwendeten Schneckenkonfiguration hat sich ergeben, dass die Aufschlusszone mit dem Harz Araldite EPN1273 bis einschließlich dem mit 5 markierten Gehäuseelement ging. Es wurden 4,25 kg/h Nitrilkautschuk über die Einlaufzone dosiert und 4 kg/h EPN1273 in Gehäuseelement 3 zudosiert. Wurde die Menge an EPN1273 auf z.B. 10 kg/h in Gehäuseelement 3 erhöht, so wurde kein homogen aufgeschlossenes Material erhalten. Wurde der restliche Reaktivharzanteil an EPN1273 (3,09 kg/h) in Gehäuseelement 5 zugegeben, so wurde das Aufschlussbild schlechter (V1). Dies zeigte sich an mehr als 8 Partikeln im Aufschlusstest. Wird der Zugabepunkt zu Gehäuseelement 6 verschoben (E1), so wird ein homogen aufgeschlossenes Material erhalten, welches im Aufschlusstest keine Partikel zeigt. Somit ist für diese Schneckenkonfiguration und Harzauswahl die Aufschlusszone bis einschließlich Gehäuseelement 5. Erst

danach können ohne Probleme die restlichen Bestandteile in die aufgeschlossene Masse eingearbeitet werden, ohne die Aufschlussqualität zu beeinflussen. Auch mit deutlich weniger Harz in der Aufschlusszone und dementsprechend erhöhter Harzzugabe im Gehäuseelement 6 werden homogene Klebmassen erhalten (E2). Die Dosierung des Härters und Beschleunigers erfolgte als Batch - also in vorgemischter Form - in Gehäuseelement 9. Die Massetemperatur in dieser Zone war unter 120 °C.

| E1 | Gew.Teile | | Massestrom | Dosierpunkt |
|---|---|---|---|---|
| NBR | 30 | 28,4% | 4,25 | Einlauf |
| EPN1273 | 50 | 47,3% | 4 | Gehäuseelement 3 |
| EPN1273 | | | 3,09 | Gehäuseelement 6 |
| EP828 | 20 | 18,9% | 2,84 | Gehäuseelement 7 |
| DICY | 4,39 | 4,1% | 0,82 | |
| 2MA-OK | 1,4 | 1,3% | | Gehäuseelement 9 |

| E2 | Gew.Teile | | Massestrom | Dosierpunkt |
|---|---|---|---|---|
| NBR | 30 | 28,4% | 4,25 | Einlauf |
| EPN1273 | 50 | 47,3% | 2 | Gehäuseelement 3 |
| EPN1273 | | | 5,09 | Gehäuseelement 6 |
| EP828 | 20 | 18,9% | 2,84 | Gehäuseelement 7 |
| DICY | 4,39 | 4,1% | 0,82 | |
| 2MA-OK | 1,4 | 1,3% | | Gehäuseelement 9 |

| V1 | Gew.Teile | | Massestrom | Dosierpunkt |
|---|---|---|---|---|
| NBR | 30 | 28,4% | 4,25 | Einlauf |
| EPN1273 | 50 | 47,3% | 2 | Gehäuseelement 3 |
| EPN1273 | | | 5,09 | Gehäuseelement 5 |
| EP828 | 20 | 18,9% | 2,84 | Gehäuseelement 7 |
| DICY | 4,39 | 4,1% | 0,82 | |
| 2MA-OK | 1,4 | 1,3% | | Gehäuseelement 9 |

Die Austrittstemperatur der Klebmasse aus dem Mehrwellenextruder lag im Bereich von 70 °C und 85 °C.

In **V2** wurde versucht, die Klebmasse K1 in einem Doppelschneckenextruder (KraussMaffei Berstorff, 42 mm Schneckendurchmesser, 36 L/D) zu verarbeiten. Die Dosierpunkte waren in der Zugabereihenfolge analog zu E2 gewählt, wobei die Komponenten über Sidefeeds dosiert wurden.

Obwohl das Reaktivharz gleich zu Beginn im ersten Zugabepunkt - entsprechend dem erfindungsgemäßen Verfahren - zugegeben wurde, konnte kein Aufschluss des nicht-thermoplastischen Elastomers erreicht werden. Im Gegenteil, der Extruder verblockte, da der Kautschuk nicht aufgeschlossen wurde. Auch eine Erhöhung der Harzmenge (vergleichbar mit den Einstellungen von E1) führte zu einem Verblocken des Extruders. Die Zugabe von flüssigem Reaktivharz Epikote 828 im ersten Zugabepunkt mit 2,5 kg/ h - 5 kg/h verhinderte zwar die Verblockung, jedoch wurde der Nitrilkautschuk nicht aufgeschlossen. Aufgrund der großen Menge an Reaktivharz schien es so, als ob die Kautschukpartikel in der flüssigen Reaktivharzschmelze durch den Extruder "schwammen" und somit nicht ausreichend Scherung zum Aufschließen erfahren konnten.

Die nach dem erfindungsgemäßen Verfahren hergestellten Klebemassen E1 und E2 wurden zwischen zwei silikonisierten PET-Linern bei 90 °C und 200 bar für 3 Minuten in einer Vakuumpresse zu 100μm dicken Filmen gepresst. Die erhaltenen Transferklebebänder zeigten folgende Verklebungseigenschaften.

| | E1 | E2 |
|---|---|---|
| Klebkraft (Stahl) / N $cm^{-1}$ | 3,2 | 2,8 |
| Verklebungsfestigkeit / MPa | 16,7 | 14,2 |

(fortgesetzt)

| | E1 | E2 |
|---|---|---|
| $Lf_{40}$/ %* | 99 | 98 |
| Aufschlusstest / Partikel pro 100 $cm^2$ | 0 | 1 |
| Vorvernetzung** | Nein | Nein |
| Onsettemperatur $T_{RO}$ | 146 °C | 148 °C |
| Mastifikation*** | Nein | Nein |
| Anzahl Gasblasen pro 100 $cm^2$ im Aufschlusstest | 0 | 0 |

* gemessen mit dem oben beschriebenen Test zur Lagerfähigkeit
** gemessen mit dem oben beschriebenen Löslichkeitstest
*** bestimmt über Gelpermeationschromatografie im Vergleich zu einer in einem Kneter hergestellten Klebmasse der gleichen Zusammensetzung. Insbesondere ist im hochmolekularen Bereich (M > 100000 g/mol kein Unterschied feststellbar.

Die Beispiele E1 und E2 zeigen die gleiche Klebemasse, die mit unterschiedlichen Verfahrensparametern hergestellt wurde. In allen Fällen ist der Aufschluss des Nitrilkautschukes hervorragend mit 0 bis 1 Partikel pro 100 $cm^2$ im Aufschlusstest und keiner Vorvernetzung im Löslichkeitstest. Der Lagerfähigkeitstest zeigt, dass die latent härtbaren Klebmassen wenig in dem erfindungsgemäßen Verfahren vorgeschädigt werden.

## Patentansprüche

1. Verfahren zur Herstellung von haftklebrigen Klebemassen umfassend zumindest eine Elastomerkomponente sowie zumindest einen Reaktivklebstoff umfassend ein oder mehrere Reaktivharze, von denen zumindest ein Reaktivharz ein Epoxidharz ist, sowie zumindest einen Härter für Epoxidharze,
ausgehend von einem oder mehreren nicht-thermoplastischen Elastomeren,
**dadurch gekennzeichnet, dass**
die nicht-thermoplastischen Elastomere in einem Mehrwellenextruder, der wenigstens sechs in einem Kreis angeordnete achsparallele, gleichsinnig drehende Schneckenwellen aufweist, mit zumindest einem Teil der Epoxidharze aufgeschlossen werden.

2. Verfahren nach Anspruch 1, **dadurch gekennzeichnet, dass**
sich das Reaktivsystem im Wesentlichen chemisch inert zu den nicht-thermoplastischen Elastomeren verhält.

3. Verfahren nach einem der vorangehenden Ansprüche, **dadurch gekennzeichnet, dass**
als nicht-thermoplastische Elastomere teilweise oder ausschließlich ein oder mehrere Nitrilkautschuke eingesetzt werden.

4. Verfahren nach Anspruch 3, **dadurch gekennzeichnet, dass**
als Nitrilkautschuke teilweise oder ausschließlich solche mit einem Acrylnitrilanteil von mindestens 25 %, bevorzugt von mindestens 30 %, sehr bevorzugt von mindestens 40 % eingesetzt werden.

5. Verfahren nach einem der vorangehenden Ansprüche, **dadurch gekennzeichnet, dass** die zum Aufschluss verwendeten Epoxidharze solche sind oder umfassen, die eine Erweichungstemperatur von mindestens 40 °C oder eine Viskosität von mehr als 50 Pa·s bei Raumtemperatur aufweisen.

6. Verfahren nach einem der vorangehenden Ansprüche, **dadurch gekennzeichnet, dass** in einem oder mehreren der Aufschlusszone nachfolgenden Gehäuseelementen weitere Mengen Reaktivharze, insbesondere Epoxidharze, zugegeben werden, bis das in der resultierenden haftklebrigen Klebmasse vorliegende Verhältnis von nicht-thermoplastischen Elastomeren zu Reaktivharzen erreicht ist.

7. Verfahren nach Anspruch 6, **dadurch gekennzeichnet, dass**
die in einem oder mehreren der Aufschlusszone nachfolgenden Gehäuseelementen zugegebenen Reaktivharze,

insbesondere Epoxidharze, sich von den im ersten Gehäuseelement zugegebenen Reaktivharzen chemisch unterscheiden.

8. Verfahren nach einem der vorangehenden Ansprüche, **dadurch gekennzeichnet, dass** der zumindest eineHärter in einem oder mehreren der Aufschlusszone nachfolgenden Gehäuseelementen und/oder in einer dem Mehrwellenextruder unmittelbar oder mittelbar nachgeschalteten Einheit zugegeben wird.

9. Verfahren nach Anspruch 8, **dadurch gekennzeichnet, dass** die Zugabe des Härters bei einer Temperatur der Compoundiermasse unterhalb der Aktivierungstemperatur (Onsettemperatur $T_{RO}$ des DDK-Diagramms nach DSC gemäß DIN 53765:1994) des Reaktivsystems erfolgt, bevorzugt bei einer Temperatur der Compoundiermasse, die mindestens 10 °C unter der Aktivierungsenergie des Reaktivsystems liegt.

10. Verfahren nach einem der vorangehenden Ansprüche, **dadurch gekennzeichnet dass** in einer oder mehreren der Aufschlusszone nachfolgenden Compoundierzonen und/oder in einer dem Mehrwellenextruder unmittelbar oder mittelbar nachgeschalteten Einheit ein oder mehrere Beschleuniger für das Reaktivsystem zugegeben werden.

11. Verfahren nach Anspruch 10, **dadurch gekennzeichnet, dass** die resultierende haftklebrige Klebemasse nach der Zugabe des Härters unterhalb der Aktivierungstemperatur (Onsettemperatur $T_{RO}$ des DDK-Diagramms nach DSC gemäß DIN 53765:1994) des Reaktivsystems zu einer Klebemassenschicht ausgeformt wird, bevorzugt bei einer Temperatur der Klebmasse, die mindestens 10 °C unter der Aktivierungsenergie des Reaktivsystems liegt.

12. Verfahren nach einem der vorangehenden Ansprüche, **dadurch gekennzeichnet, dass** der überwiegende Teil der insgesamt eingesetzten Reaktivharze Epoxidharze sind.

13. Verfahren nach Anspruch 12, **dadurch gekennzeichnet, dass** mehr als 95 % der insgesamt eingesetzten Reaktivharze Epoxidharze sind, insbesondere dass als Reaktivharze ausschließlich Epoxidharze eingesetzt werden.

## Claims

1. Method for producing pressure-sensitive adhesives comprising at least one elastomer component and also at least one reactive adhesive comprising one or more reactive resins of which at least one reactive resin is an epoxy resin, and also at least one hardener for epoxy resins,
starting from one or more non-thermoplastic elastomers,
**characterized in that**
the non-thermoplastic elastomers are digested with at least part of the epoxy resins in a multi-screw extruder which has at least six axially parallel co-rotating screw shafts arranged in a circle.

2. Method according to Claim 1, **characterized in that** the reactive system is substantially chemically inert towards the non-thermoplastic elastomers.

3. Method according to either of the preceding claims, **characterized in that** one or more nitrile rubbers are used partly or exclusively as non-thermoplastic elastomers.

4. Method according to Claim 3, **characterized in that** nitrile rubbers used are partly or exclusively those having an acrylonitrile fraction of at least 25%, preferably of at least 30%, very preferably of at least 40%.

5. Method according to any of the preceding claims,
**characterized in that**
the epoxy resins used for digestion are or comprise epoxy resins having a softening temperature of at least 40°C or a viscosity of more than 50 Pa·s at room temperature.

6. Method according to any of the preceding claims,
**characterized in that**

further amounts of reactive resins, more particularly epoxy resins, are added in one or more barrel elements downstream of the digestion zone, until the ratio of non-thermoplastic elastomers to reactive resins reaches that which is present in the resulting pressure-sensitive adhesive.

**7.** Method according to Claim 6, **characterized in that** the reactive resins, more particularly epoxy resins, added in one or more barrel elements downstream of the digestion zone differ chemically from the reactive resins added to the first barrel element.

**8.** Method according to any of the preceding claims,
**characterized in that**
the at least one hardener is added in one or more barrel elements downstream of the digestion zone and/or in a unit connected directly or indirectly downstream of the multi-screw extruder.

**9.** Method according to Claim 8, **characterized in that** the addition of the hardener is added at a temperature of the compounding composition below the activation temperature (onset temperature $T_{RO}$ in the DSC diagram after DSC according to DIN 53765:1994) of the reactive system, preferably at a temperature of the compounding composition which is at least 10°C below the activation energy of the reactive system.

**10.** Method according to any of the preceding claims,
**characterized in that**
one or more accelerators for the reactive system are added in one or more compounding zones downstream of the digestion zone and/or in a unit connected directly or indirectly downstream of the multi-screw extruder.

**11.** Method according to Claim 10, **characterized in that** the resulting pressure-sensitive adhesive after the addition of the hardener is shaped below the activation temperature (onset temperature $T_{RO}$ in the DSC diagram after DSC according to DIN 53765:1994) of the reactive system to form a layer of adhesive, preferably at a temperature of the adhesive which is at least 10°C below the activation energy of the reactive system.

**12.** Method according to any of the preceding claims,
**characterized in that** the predominant proportion of the reactive resins used overall are epoxy resins.

**13.** Method according to Claim 12, **characterized in that** more than 95% of the reactive resins used overall are epoxy resins, more particularly **in that** epoxy resins exclusively are used as reactive resins.

## Revendications

**1.** Procédé pour la préparation de masses adhésives autoadhésives comprenant au moins un composant de type élastomère ainsi qu'au moins un adhésif réactif comprenant une ou plusieurs résines réactives, parmi lesquelles au moins une résine réactive est une résine époxy, ainsi qu'au moins un agent de durcissement pour des résines époxy,
à partir d'un ou plusieurs élastomères non thermoplastiques,
**caractérisé en ce que** les élastomères non thermoplastiques sont digérés avec au moins une partie des résines époxy, dans une extrudeuse à plusieurs arbres qui présente au moins six arbres à vis tournant dans le même sens, parallèles à l'axe, disposés en cercle.

**2.** Procédé selon la revendication 1, **caractérisé en ce que** le système réactif se comporte de manière essentiellement chimiquement inerte par rapport aux élastomères non thermoplastiques.

**3.** Procédé selon l'une quelconque des revendications précédentes, **caractérisé en ce qu'**en tant qu'élastomères non thermoplastiques, un ou plusieurs caoutchoucs au nitrile sont utilisés, en partie ou exclusivement.

**4.** Procédé selon la revendication 3, **caractérisé en ce qu'**en tant que caoutchoucs au nitrile, en partie ou exclusivement ceux dotés d'une proportion d'acrylonitrile d'au moins 25 %, préférablement d'au moins 30 %, très préférablement d'au moins 40 % sont utilisés.

**5.** Procédé selon l'une quelconque des revendications précédentes, **caractérisé en ce que** les résines époxy utilisées pour la digestion sont celles ou comprennent celles qui présentent une température de ramollissement d'au moins

40 °C ou une viscosité de plus de 50 Pa.s à température ambiante.

6. Procédé selon l'une quelconque des revendications précédentes, **caractérisé en ce que** dans un ou plusieurs éléments de boîtier suivant la zone de digestion, des quantités supplémentaires de résines réactives, en particulier de résines époxy, sont ajoutées, jusqu'à ce que le rapport d'élastomères non thermoplastiques sur résines réactives présent dans la masse adhésive autoadhésive résultante soit atteint.

7. Procédé selon la revendication 6, **caractérisé en ce que** les résines réactives, en particulier les résines époxy, ajoutées dans un ou plusieurs éléments de boîtier suivant la zone de digestion, sont différentes chimiquement des résines réactives ajoutées au premier élément de boîtier.

8. Procédé selon l'une quelconque des revendications précédentes, **caractérisé en ce qu'**au moins un agent de durcissement est ajouté dans un ou plusieurs éléments de boîtier suivant la zone de digestion et/ou dans une unité située en aval directement ou indirectement de l'extrudeuse à plusieurs arbres.

9. Procédé selon la revendication 8, **caractérisé en ce que** l'ajout de l'agent de durcissement est ajouté à une température de la masse de compoundage inférieure à la température d'activation (température d'apparition $T_{RO}$ du diagramme DDK par DSC selon la norme DIN 53765:1994) du système réactif, préférablement à une température de la masse de compoundage qui est au moins 10 °C en dessous de l'énergie d'activation du système réactif.

10. Procédé selon l'une quelconque des revendications précédentes, **caractérisé en ce que** dans une ou plusieurs des zones de compoundage suivant la zone de digestion et/ou dans une unité située en aval directement ou indirectement de l'extrudeuse à plusieurs arbres, un ou plusieurs accélérateurs pour le système réactif sont ajoutés.

11. Procédé selon la revendication 10, **caractérisé en ce que** la masse adhésive autoadhésive résultante, après l'ajout de l'agent de durcissement en dessous de la température d'activation (température d'apparition $T_{RO}$ du diagramme DDK par DSC selon la norme DIN 53765:1994) du système réactif, est formée pour donner une couche de masse adhésive, préférablement à une température de la masse adhésive qui est au moins 10 °C en dessous de l'énergie d'activation du système réactif.

12. Procédé selon l'une quelconque des revendications précédentes, **caractérisé en ce que** la majorité des résines réactives utilisées au total sont des résines époxy.

13. Procédé selon la revendication 12, **caractérisé en ce que** plus de 95 % des résines réactives utilisées au total sont des résines époxy, en particulier **en ce qu'**exclusivement des résines époxy sont utilisées en tant que résines réactives.

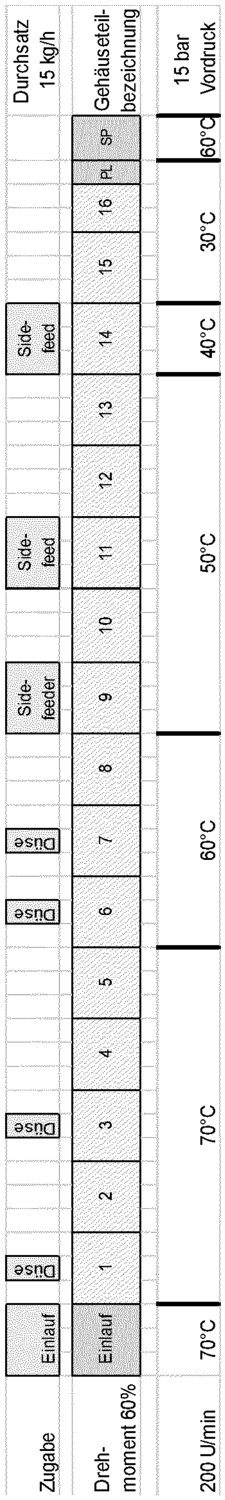
Zugabe
Einlauf
Düse
Düse
Düse
Düse
Side-feeder
Side-feed
Side-feed
Durchsatz 15 kg/h
Dreh-moment 60%
Einlauf
1
2
3
4
5
6
7
8
9
10
11
12
13
14
15
16
PL
SP
Gehäuseteil-bezeichnung
200 U/min
70°C
70°C
60°C
50°C
40°C
30°C
60°C
15 bar Vordruck

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007093318 A
- DE 102015217860 A
- WO 4911157 A
- DE 19806609 A
- DE 102009025641 A
- US 8741094 B
- DE 102015120583 A
- DE 102015120585
- DE 102015120586
- EP 1819794 A
- WO 2006131214 A
- US 3117099 A
- US 3018262 A
- EP 1114834 A
- US 8835574 A
- EP 2799509 A
- US 6908722 B1
- US 4231951 A
- US 4256828 A
- US 4058401 A
- US 4138255 A
- US 2010063221 A1
- US 3729313 A
- US 3741769 A
- US 4250053 A
- US 4394403 A
- EP 0542716 B1
- DE 102014010036 A
- DE 102015120585 A
- DE 102015120586 A


### In der Beschreibung aufgeführte Nicht-Patentliteratur


- Tackifier Resins. **VON DONATAS SATAS.** Handbook of Pressure Sensitive Adhesive Technology. van Nostrand, 1989
- **VON BODO MÜLLER ; WALTER RATH.** *Formulierung von Kleb- und Dichtstoffen*
- *CHEMICAL ABSTRACTS,* 68490-66-4